(19) Europäisches Patentamt / European Patent Office / Office européen des brevets

(11) **EP 3 833 933 B1**

(12) **EUROPÄISCHE PATENTSCHRIFT**

(45) Veröffentlichungstag und Bekanntmachung des Hinweises auf die Patenterteilung:
**26.10.2022** **Patentblatt 2022/43**

(21) Anmeldenummer: **19733423.8**

(22) Anmeldetag: **14.06.2019**

(51) Internationale Patentklassifikation (IPC):
**G01D 3/08** (2006.01)  **G01D 5/20** (2006.01)
**G01J 5/20** (2006.01)  **G01K 7/00** (2006.01)
**G01K 13/08** (2006.01)

(52) Gemeinsame Patentklassifikation (CPC):
**G01D 5/2053; G01D 3/08**

(86) Internationale Anmeldenummer:
**PCT/EP2019/065765**

(87) Internationale Veröffentlichungsnummer:
**WO 2020/030336 (13.02.2020 Gazette 2020/07)**

(54) **INDUKTIVER POSITIONSSENSOR, INSBESONDERE ZUR ERFASSUNG MINDESTENS EINER ROTATIONSEIGENSCHAFT EINES ROTIERENDEN ELEMENTS**

INDUCTIVE POSITION SENSOR, IN PARTICULAR FOR SENSING AT LEAST ONE ROTATION PROPERTY OF A ROTATING ELEMENT

CAPTEUR DE POSITION INDUCTIF, EN PARTICULIER POUR ACQUÉRIR AU MOINS UNE CARACTÉRISTIQUE DE ROTATION D'UN ÉLÉMENT ROTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2018 DE 102018213413**

(43) Veröffentlichungstag der Anmeldung:
**16.06.2021** **Patentblatt 2021/24**

(73) Patentinhaber: **Robert Bosch GmbH**
**70442 Stuttgart (DE)**

(72) Erfinder: **UTERMOEHLEN, Fabian**
**59557 Lippstadt (DE)**

(56) Entgegenhaltungen:
EP-A1- 2 027 475  EP-A1- 2 902 759
EP-A1- 3 062 076  WO-A1-2018/108365
US-A1- 2006 255 794

## Beschreibung

Stand der Technik

Relevante Dokumente aus dem Stand der Technik sind WO2018108365A1, EP2902759A1, EP3062076A1, US2006/255794A1 und EP2027475A1.

Aus dem Stand der Technik sind zahlreiche Sensoren bekannt, welche mindestens eine Rotationseigenschaft rotierender Elemente erfassen. Beispiele derartiger Sensoren sind in Konrad Reif (Hrsg.): Sensoren im Kraftfahrzeug, 2. Auflage, 2012, Seiten 63-74 und 120-129 beschrieben. Beispielsweise kann eine Lage einer Nockenwelle einer Brennkraftmaschine relativ zu einer Kurbelwelle mit einem so genannten Phasengeber mittels eines Hall-Sensors bestimmt werden.

Beispielsweise für eine Realisierung einer Traktion in Elektrofahrzeugen werden häufig entweder Asynchronmaschinen oder Synchronmaschinen verwendet, welche jeweils aus einem ortsfesten Stator und einem sich drehenden Rotor bestehen. Der Stator trägt in der Regel drei, beispielsweise um $120°/p$ zueinander versetzte Wicklungsstränge, wobei p eine Anzahl von Polpaaren repräsentiert. Bei Asynchronmaschinen besteht der Rotor üblicherweise aus an Enden ringförmig kurzgeschlossenen elektrisch leitfähigen Stäben. Bei einer Drehung eines Rotorfeldes kann so in den Stäben eine Spannung induziert werden, welche einen Stromfluss hervorruft, welcher wiederum ein Gegenmagnetfeld aufbaut und es zu einer rotatorischen Bewegung kommt. Die induzierte Spannung ist Null, wenn sich Rotorfeld und Stator gleich schnell drehen. Es stellt sich eine Drehzahldifferenz ein, welche als Schlupf bezeichnet wird und welche das Moment des Motors definiert. Bei Synchronmaschinen umfasst der Rotor einen Läufer, welcher eine Erregerspule trägt, in welchem ein Gleichstrom fließt und ein statisches Magnetfeld erzeugt. Alternativ dazu kann ein Permanentmagnet als Rotor verwendet werden. Es handelt sich dann um eine permanent erregte Synchronmaschine, welche aufgrund der leistungslosen Erregung einen höheren Wirkungsgrad aufweist und so für Traktionsanwendungen geeigneter sein kann. Eine Drehzahl des Rotors kann prinzipbedingt identisch zur Drehzahl eines Erregerfelds sein. Das Drehmoment kann von einem Phasenversatz, also einer Winkeldifferenz zwischen Statorfeld und Rotor, abhängen. Zur Regelung des Moments, Ansteuerung eines Inverters und entsprechender Bereitstellung von Statorspulensignalen muss für Asynchronmaschinen die Drehzahl des Rotors und für Synchronmaschinen eine Absolutwinkelstellung des Rotors bekannt sein. In beiden Fällen, Synchronmaschinen und Asynchronmaschinen, ist insbesondere aus Gründen der funktionalen Sicherheit zusätzlich die Drehrichtung zu bestimmen. Die maximale Leistung der Maschine kann zudem durch eine Stator- und Rotortemperatur begrenzt sein.

Um die Rotorlage zu ermitteln, ist es bekannt, so genannte Resolver zu verwenden. Bei diesem handelt es sich um einen elektromagnetischen Messumformer, bei dem ein Rotorpaket drehzahlfest auf der Welle des Motors montiert ist. Kreisringförmig umlaufend sind auf einem Stator eine Erregerspule sowie mehrere Empfängerspulen montiert. Die Erregerspule wird mit einem Wechselspannungssignal beaufschlagt und durchsetzt die gesamte Anordnung mit einem elektromagnetischen Wechselfeld. Drehwinkelabhängig kann in einer ersten Empfängerspule eine sinusförmig amplitudenmodulierte Spannung induziert werden während in einer zweiten Empfängerspule eine cosinusförmig amplitudenmodulierte Spannung induziert wird. Die Bereitstellung des Erregersignals sowie das Auslesen der Signale kann innerhalb der Leistungselektronik bzw. dedizierten Bausteinen innerhalb eines Steuergerätes zur Motorregelung realisiert werden. Ein Resolver ist eine rein passive Komponente und sämtliche Signalverarbeitung kann im Steuergerät, bzw. der Leistungselektronik, realisiert werden, so dass höchste Anforderungen an die funktionale Sicherheit gemäß ISO 26262 erfüllt werden können. Resolver benötigen jedoch relativ viel Bauraum, erfordern eine komplexe Signalbereitstellung und -aufbereitung und müssen mit sehr geringen mechanischen Toleranzen montiert werden, um eine ausreichend hohe Genauigkeit zu erreichen. Aus diesen genannten Gründen können Systemkosten entsprechend hoch sein. Weiterhin kann es aus Platzgründen nicht möglich sein, auf den Stator des Resolvers ein redundantes Empfangsspulensystem zu montieren, um eine Verfügbarkeit des Sensors zu erhöhen. So kann ein Ausfall des Sensors zum "Liegenbleiben" des Fahrzeugs führen.

Die Statortemperatur kann aufgrund der begrenzten Temperaturfestigkeit des Isolationslackes der Statorwicklungen bestimmend für die maximale Stromstärke in den Statorspulen, und damit für das abgegebene Drehmoment, sein. Es ist bekannt, zur Bestimmung der Temperatur einen Temperatursensor zu verwenden, welcher in die Statorspulen gewickelt wird. Mittels Modellen kann auf eine Temperaturverteilung geschlossen werden. Die Rotortemperatur, welche vor allem bei Asynchronmaschinen kritisch sein kann, da im Käfigläufer permanent hohe Ströme fließen, wird bisher nicht ermittelt und lediglich über Modelle berechnet. Vor allem die fehlende Messinformation über die Rotortemperatur begrenzt die Performance der elektrischen Maschine und macht eine Modellierung mit entsprechendem Aufwand und Ungenauigkeiten unabdingbar, siehe DE 10 2014 213 103.

Weiter bekannt zur kontaktlosen Messung einer Temperatur sind Ferninfrarotsensoren nach dem bolometrischen Prinzip, welche jeweils integrierte spektral abgestrahlte Leistung eines Objektes detektieren. Aufgrund der Absorption in der Atmosphäre liegt der auswertbare Wellenlängenbereich etwa zwischen 7 und 15 $\mu$m. Gemäß dem Planck Gesetz emittiert ein Objekt Strahlung abhängig von seiner Temperatur und Oberflächenbeschaffenheit. Für einen beliebigen Körper gilt dabei für die spektrale Leistungsdichte

$$p_{th,\lambda} = \epsilon \frac{2\pi hc^2}{\lambda^5} \left[ \exp\left(\frac{hc}{\lambda k_b T}\right) - 1 \right]^{-1},$$

wobei h die Planck Konstante, c die Lichtgeschwindigkeit, $k_B$ die Boltzmann Konstante und T die Temperatur ist. Die Emissivität des Objekts, also wie effektiv eine Strahlung emittiert werden kann, wird über ε berücksichtigt. Dieser Faktor kann als wellenlängenunabhängig angenommen werden. Eine Integration eines Sensors, basierend auf dem bolometrischen Prinzip, in der elektrischen Maschine ist aufgrund schwieriger Zugänglichkeit nahezu unmöglich. Weiterhin müssten zusätzliche Leitungen zwischen dem Sensor und dem Steuergerät vorgesehen werden, um die Temperaturinformation zu übertragen. Darüber hinaus ist der Emissionskoeffizient des Objekts im Allgemeinen nicht bekannt und so ein Rückschluss auf eine absolute Objekttemperatur nicht eindeutig möglich. Eine absolute Objekttemperatur könnte zwar mit so genannten Multicolor Bolometern bestimmt werden, jedoch wird dazu eine kostenintensive Umsetzung benötigt.

Offenbarung der Erfindung

Im Rahmen der vorliegenden Erfindung wird daher ein induktiver Positionssensor, insbesondere zur Erfassung mindestens einer Rotationseigenschaft eines um mindestens eine Rotationsachse rotierenden Elements, vorgeschlagen. Unter einem "Sensor" wird im Rahmen der vorliegenden Erfindung grundsätzlich eine beliebige Vorrichtung verstanden, welche geeignet ist, mindestens eine Messgröße zu erfassen. Unter einem induktiven Positionssensor zur Erfassung mindestens einer Rotationseigenschaft wird dementsprechend ein Sensor verstanden, welcher eingerichtet ist, um die mindestens eine Rotationseigenschaft zu erfassen, beispielsweise zu messen, und welche beispielsweise mindestens ein elektrisches Signal entsprechend der erfassten Eigenschaft erzeugen kann, wie beispielsweise eine Spannung oder einen Strom. Auch Kombinationen von Eigenschaften können erfassbar sein. Unter einer "Rotationseigenschaft" wird im Rahmen der vorliegenden Erfindung grundsätzlich eine Eigenschaft verstanden, welche die Rotation des rotierenden Elements zumindest teilweise beschreibt. Hierbei kann es sich beispielsweise um eine Winkelgeschwindigkeit, eine Drehzahl, eine Winkelbeschleunigung, eine Winkelposition oder eine andere Eigenschaft handeln, welche eine kontinuierliche oder diskontinuierliche, gleichförmige oder ungleichförmige Rotation oder Drehung des rotierenden Elements zumindest teilweise charakterisieren kann. Beispielsweise kann es sich bei der Rotationseigenschaft um eine Position, insbesondere eine Winkelposition, eine Drehzahl, eine Winkelbeschleunigung oder um eine Kombination von mindestens zwei dieser Größen handeln. Auch andere Eigenschaften und/oder andere Kombinationen von Eigenschaften können erfassbar sein. Unter einer "Winkelposition" wird im Rahmen der vorliegenden Erfindung grundsätzlich ein Drehwinkel einer rotationsfähigen Vorrichtung, beispielsweise des rotierenden Elements oder eines Geberrads, bezüglich einer senkrecht auf der Rotationsachse stehenden Achse verstanden. Insbesondere kann der induktive Positionssensor ein induktiver Rotorlagesensor oder Rotorpositionssensor sein. Unter einem "induktiven Positionssensor" kann im Rahmen der vorliegenden Erfindung grundsätzlich ein beliebiger Sensor verstanden werden, der ein Signal entsprechend einer erfassten Eigenschaft erzeugen kann, insbesondere ein Messsignal, insbesondere ein elektrisches Messsignal, beispielsweise eine Spannung oder einen Strom, wobei eine Erzeugung des Messsignals auf einer Änderung eines magnetischen Flusses beruht. Insbesondere kann die erfasste Eigenschaft eine Position, beispielsweise eine Winkelposition umfassen. Insbesondere kann es sich bei dem induktiven Positionssensor um einen induktiven Magnetsensor handeln. Auch andere Ausgestaltungen sind jedoch grundsätzlich möglich.

Der induktive Positionssensor kann insbesondere zum Einsatz in einem Kraftfahrzeug eingerichtet sein, insbesondere für Traktionsanwendungen für elektrische Maschinen. Unter einem "rotierenden Element" wird im Rahmen der vorliegenden Erfindung grundsätzlich ein beliebiges Element verstanden, welches um mindestens eine Achse rotiert. Beispielsweise kann das rotierende Element eine Welle sein, beispielsweise eine Welle in einer Antriebsmaschine, beispielsweise eine Nockenwelle oder eine Kurbelwelle. Beispielsweise kann eine Winkelposition einer Nockenwelle oder eine Drehzahl einer Nockenwelle oder eine Winkelbeschleunigung einer Nockenwelle oder eine Kombination von mindestens zwei dieser Größen bestimmt werden. Auch andere Eigenschaften und/oder andere Kombinationen von Eigenschaften können erfassbar sein.

Der induktive Positionssensor gemäß der Erfindung ist in Anspruch 1 definiert.

Unter einem "Schaltungsträger" kann eine Vorrichtung verstanden werden, auf welcher mindestens ein elektrisches Bauelement angeordnet werden kann. Der Schaltungsträger kann flexibel ausgestaltet sein. Insbesondere kann der Schaltungsträger ein flexibles Material umfassen. Der Schaltungsträger kann insbesondere ausgewählt sein aus der Gruppe bestehend aus: einer Leiterplatte, insbesondere einer Starrflex-Leiterplatte, beispielsweise einer gebogenen Starrflex-Leiterplatte; einer starren Leiterplatte, insbesondere einer starren Leiterplatte mit Einkerbungen; einer Leiterkarte; einer Platine und einer gedruckten Schaltung, insbesondere einem "printed circuit board" (PCB).

Der Schaltungsträger kann im Wesentlichen koaxial zu der Rotationsachse angeordnet sein. Der Schaltungsträger kann beispielsweise ein Geberrad oder ein Kreissegment des Geberrads eines weiter unten beschriebenen Sensorsystems im Wesentlichen kreisförmig oder kreissegmentförmig umgeben. Unter dem Begriff "im Wesentlichen kreisförmig" wird im Rahmen der vorliegenden Erfindung grundsätzlich verstanden, dass das beschriebene Bauelement einen Krümmungsradius aufweist. Der Krümmungsradius kann innerhalb des Bauelements um einen Wert von 0 % bis 80 %, bevorzugt von 0 % bis 50 %, mehr bevorzugt von 0 % bis 20 % und besonders bevorzugt von 0 % bis 5 % variieren. Insbesondere kann der Krümmungsradius auch konstant sein. Alternativ oder zusätzlich kann der Schaltungsträger auch aus zwei oder mehr Segmenten zusammengesetzt sein, welche beispielsweise jeweils eben oder auch gekrümmt ausgestaltet sein können und welche beispielsweise miteinander verbunden sein können. Die Segmente können insgesamt dann ebenfalls koaxial zur Rotationsachse angeordnet sein, auch wenn die einzelnen Segmente dann beispielsweise tangential angeordnet sind. Weiterhin kann der Schaltungsträger in einem Gehäuse, insbesondere in einem Spritzgussgehäuse, angeordnet sein.

Unter einer "Spulenanordnung" kann im Rahmen der vorliegenden Erfindung grundsätzlich eine beliebige Vorrichtung verstanden werden, die mindestens eine Spule umfasst. Unter einer "Spule" wird im Rahmen der vorliegenden Erfindung grundsätzlich ein beliebiges Bauelement verstanden, welches eine Induktivität aufweist und geeignet ist, bei Stromfluss ein Magnetfeld zu erzeugen und/oder umgekehrt. Beispielsweise kann eine Spule mindestens eine vollständige oder teilweise geschlossene Leiterschleife oder Windung umfassen. Unter einer "Erregerspule" kann im Rahmen der vorliegenden Erfindung grundsätzlich eine Spule verstanden werden, welche bei Anlegen einer elektrischen Spannung und/oder eines elektrischen Stroms einen magnetischen Fluss erzeugt. Die Erregerspule kann mindestens eine Erregerwindung aufweisen. Unter einer "Empfängerspule" wird im Rahmen der vorliegenden Erfindung grundsätzlich eine Spule verstanden, welche eingerichtet ist, aufgrund einer induktiven Kopplung zwischen Erregerspule und Empfängerspule ein Signal zu erzeugen, welches abhängig ist von der induktiven Kopplung. Beispielsweise kann die Spulenanordnung ein Empfängerspulensystem aufweisen. Unter einem "Empfängerspulensystem" kann im Rahmen der vorliegenden Erfindung grundsätzlich eine beliebige Vorrichtung verstanden werden, welche mindestens zwei, bevorzugt mindestens drei, Empfängerspulen umfasst.

Die Erregerspule kann im Wesentlichen kreisförmig ausgestaltet sein. Hinsichtlich des Begriffs "im Wesentlichen kreisförmig" wird auf obige Definition verwiesen. Die Erregerspule und die Empfängerspulen können wie in DE 10 2017 210 655.7, eingereicht am 23.06.2017, beschrieben ausgestaltet sein. Die Empfängerspulen können die Rotationsachse in einer Umfangsrichtung im Wesentlichen vollständig umlaufen, wobei jede Empfängerspule durch eine Mehrzahl benachbarter Teilwindungen gebildet ist, wobei benachbarte Teilwindungen bezüglich der Stromlaufrichtung gegensätzlich orientiert sind. Dabei ist jede Teilwindung bezüglich einer radialen Richtung, die sich von der Rotationsachse nach außen erstreckt, gebildet aus Abschnitten von wenigstens zwei nach links gekrümmten kreisbogenförmigen Leiterbahnen und aus Abschnitten von wenigstens zwei nach rechts gekrümmten kreisbogenförmigen Leiterbahnen. Alle linksgekrümmten und alle rechtsgekrümmten Leiterbahnen weisen denselben Krümmungsradius auf. Alle linksgekrümmten Leiterbahnen und alle rechtsgekrümmten Leiterbahnen erstrecken sich zwischen zwei konzentrischen Kreisen um die Rotationsachse, einem ersten Kreis mit einem ersten Radius und einem zweiten Kreis mit einem zweiten Radius, wobei ein dritter Kreis gegeben ist, der konzentrisch zum ersten Kreis gelegen ist und einen dritten Radius aufweist, der sich aus dem Mittelwert des ersten Radius und des zweiten Radius ergibt, wobei eine erste rechtsgekrümmte Leiterbahn durch drei Punkte verläuft: durch einen ersten Punkt, der auf dem ersten Kreis liegt; durch einen zweiten Punkt, der auf dem dritten Kreis liegt und in Umfangsrichtung um ein Viertel des Messbereichs gegenüber dem ersten Punkt verdreht ist; und durch einen dritten Punkt, der auf dem zweiten Kreis liegt und in Umfangsrichtung um die Hälfte des Messbereichs gegenüber dem ersten Punkt verdreht ist. Die weiteren rechtsgekrümmten Leiterbahnen ergeben sich aus der vorfolgenden rechtsgekrümmten Leiterbahn durch eine Drehung um die Drehachse um die Hälfte des Messbereichs in Umfangsrichtung. Die linksgekrümmten Leiterbahnen ergeben sich durch Spiegelungen der rechtsgekrümmten Leiterbahnen jeweils an einer Radiallinie, die sich von der Drehachse durch den Schnittpunkt der jeweiligen rechtsgekrümmten Leiterbahn mit dem dritten Kreis erstreckt. Eine Teilwindung einer Empfängerspule kann dabei als ein Teil der Empfängerspule definiert sein, der von Leiterbahnen der Empfängerspule umgeben ist, die sich nicht gegenseitig schneiden. Die Orientierung einer Teilwindung bestimmt sich über einen Stromfluss durch die Empfängerspule. Gegenläufig orientierte Teilwindungen weisen bei einem Stromfluss durch die Empfängerspule jeweils gegenläufig Stromflüsse auf, d.h. bei einer Teilwindung mit einer ersten Orientierung läuft der Strom im Uhrzeigersinn bzw. nach rechts durch die Teilwindung, bei einer Teilwindung mit einer zweiten, gegenläufigen Orientierung läuft der Strom gegen den Uhrzeigersinn bzw. nach links durch die Teilwindung. Eine Teilwindung kann lediglich beispielhaft wie eine Raute mit gekrümmten Seitenflächen aufgebaut sein. Die vier Seitenflächen einer solchen Raute können z.B. durch je zwei Teilstücke zweier linksgekrümmter Leiterbahnen und zweier rechtsgekrümmter Leiterbahnen ausgebildet sein. Beispielsweise kann dabei die Stromlaufrichtung in wenigstens zwei Abschnitten der linksgekrümmten Leiterbahnen, die eine Teilwindung bilden, einander entgegengesetzt sein. Ebenso kann die Stromlaufrichtung in wenigstens zwei Abschnitten der rechtsgekrümmten Leiterbahnen, die eine Teilwindung bilden, einander entgegengesetzt sein. Der Aufbau der Teilwindungen ist dabei so zu verstehen, dass eine gedachte gerade Linie, die von der Rotationsachse ausgeht und in radialer Richtung verläuft, eine nach links und eine nach rechts gekrümmte kreisbogenförmige Leiterbahn der Empfängerspule schneidet, wenn die gerade Linie durch das Innere der Empfängerspule verläuft. Auf diese Weise kann z.B. auch erreicht werden, dass die Amplitude der in der Empfängerspule induzierten Wechselspannung bzw. das Messsignal im Wesentlichen als Sinusfunktion von dem Drehwinkel abhängt.

Der induktive Positionssensor kann eine Anzahl von n Empfängerspulen umfassen, wobei n eine positive ganze Zahl größer eins ist. Die generierten sinusförmigen Signale der n Empfängerspulen können gegeneinander phasenversetzt sein. Beispielsweise können benachbarte sinusförmige Signale einen Phasenabstand von $2\pi/(2n)$ und/oder $360°/(2n)$ für n=2 aufweisen. Weiterhin können beispielsweise benachbarte sinusförmige Signale einen Phasenabstand von $2\pi/(n)$ und/oder $360°/(n)$ für $n \geq 3$ aufweisen. Insbesondere können benachbarte sinusförmige Signale von genau zwei Empfängerspulen einen Phasenabstand von 90° aufweisen. Insbesondere können benachbarte sinusförmige Signale von genau drei Empfängerspulen einen Phasenabstand von 120° aufweisen.

Unter einer "anwendungsspezifischen integrierten Schaltung" (ASIC) kann eine grundsätzlich beliebige elektronische Schaltung verstanden werden, welche als integrierter Schaltkreis realisiert wurde. Die anwendungsspezifische integrierte Schaltung ist eingerichtet, um ein Erregersignal für die Erregerspule bereitzustellen. Die anwendungsspezifische integrierte Schaltung kann auf dem Schaltungsträger angeordnet sein und an genau eine Erregerspule und mindestens zwei Empfängerspulen angeschlossen sein. Unter ein "Erregersignal bereitzustellen" kann verstanden werden, dass die anwendungsspezifische integrierte Schaltung eingerichtet ist, das Erregersignal zu erzeugen und/oder dass die anwendungsspezifische integrierte Schaltung eingerichtet ist, die Erregerspule mit dem Erregersignal zu beaufschlagen. Unter einem "Erregersignal" kann im Rahmen der vorliegenden Erfindung ein elektrisches Signal verstanden werden, insbesondere mindestens eine Wechselspannung und/oder mindestens ein Wechselstrom. Das Erregersignal kann ein im Wesentlichen sinusförmiges Erregersignal sein. Unter "sinusförmig" wird im Rahmen der vorliegenden Erfindung grundsätzlich eine beliebige Form verstanden, welche einen Verlauf einer Sinuskurve aufweist. Beispielsweise kann ein Verlauf einer vollständigen Sinuskurve umfasst sein oder lediglich ein Teil einer Sinuskurve. Unter "im Wesentlichen sinusförmig" können Ausführungsformen verstanden werden mit einem vollständig sinusförmigen Verlauf, wobei Abweichungen denkbar sind, welche nicht mehr als 20 %, insbesondere nicht mehr als 10 % oder sogar nicht mehr als 5 % von dem absoluten Wert der Sinusform betragen. Unter einer "vollständigen Sinuskurve" kann dabei insbesondere ein Verlauf einer Sinuskurve verstanden werden, welcher mindestens eine Periode umfasst. Hierbei kann die Sinuskurve im Nullpunkt oder einem beliebigen anderen Punkt der Sinuskurve beginnen. Die Sinusform kann beispielsweise auch abschnittsweise aus anderen Funktionen zusammengesetzt werden, so dass sich insgesamt eine näherungsweise Sinusform ergibt. Das Erregersignal kann eine Amplitude im Bereich von 0,1 V bis 10 V, bevorzugt von 5 V, aufweisen. Das Erregersignal kann eine Frequenz im Bereich von 1 MHz bis 10 MHz, bevorzugt 3,5 MHz aufweisen. Die anwendungsspezifische integrierte Schaltung kann mindestens eine Oszillatorschaltung aufweisen. Die Oszillatorschaltung kann beispielsweise einen LC Oszillator treiben, bei welchem die Erregerspule und ein Kondensator als frequenzbestimmende Elemente wirken. Durch die Beaufschlagung der Erregerspule mit dem Erregersignal kann ein elektromagnetisches Wechselfeld entstehen, welches in die Empfängerspulen koppelt und dort beispielsweise entsprechende Wechselspannungen und/oder Wechselströme induziert. Der induktive Positionssensor kann eingerichtet sein, um eine induktive Kopplung und/oder eine Änderung einer induktiven Kopplung zwischen der Erregerspule und der mindestens einen Empfängerspule zu erfassen. Die Erregerspule kann eingerichtet sein, um in Antwort auf die Beaufschlagung mit dem Erregersignal ein elektromagnetisches Wechselfeld zu erzeugen. Die Erregerspule und die Empfängerspulen können derart gekoppelt sein, dass das elektromagnetische Wechselfeld in den Empfängerspulen eine Wechselspannung induziert. Die Empfängerspulen können derart angeordnet sein, dass die Empfängerspulen bei einer Rotation des rotierenden Elements mit konstanter Winkelgeschwindigkeit um die Rotationsachse drehwinkelabhängige Signale generieren.

Die anwendungsspezifische integrierte Schaltung ist eingerichtet, um von den Empfängerspulen erzeugte Signale zu verarbeiten und als Ausgangssignale, beispielsweise einer Auswerteeinheit, bereitzustellen. Unter "Verarbeiten" kann grundsätzlich eine beliebige Operation einer Signalverarbeitung verstanden werden, um ein Ausgangsignal zu erzeugen, beispielsweise ein Auswerten, ein Filtern, ein Demodulieren. Die Signalverarbeitung kann digital und/oder analog erfolgen. Bevorzugt kann die Signalverarbeitung rein analog erfolgen. Die anwendungsspezifische integrierte Schaltung kann insbesondere eingerichtet sein, um durch Demodulation eines in den Empfängerspulen induzierten Signals mit einem Trägersignal, also einem Signal der Erregerspule auch Sendespule genannt, auf einen Betrag und eine Phase der Kopplung zu schließen. Der Betrag kann insbesondere kontinuierlich mit dem Drehwinkel variieren. Eine Phasenlage kann beispielsweise 0° oder 180° betragen. Die anwendungsspezifische integrierte Schaltung kann mindestens eine Demodulationsvorrichtung aufweisen, welche eingerichtet ist, um die Signale der Empfängerspulen zu demodulieren. Das Demodulieren kann ein Multiplizieren mit dem Erregersignal umfassen. Beispielsweise kann durch eine Multiplikation des Betrags mit einer Kosinusfunktion ein vorzugsweise offsetfreies Sin/Cos-System entstehen, insbesondere bei Verwendung von zwei Empfängerspulen mit 90° Phasenversatz bezogen auf den Messbereich. Bei Verwendung von drei Empfängerspulen mit typischerweise 120° Phasenversatz bezogen auf den Messbereich kann insbesondere ein dreiphasiges Sinussignal entstehen, welches beispielsweise durch Anwendung der Clarke-Transformation in ein Sin/Cos-System überführt werden kann. Mit Hilfe der Arkustangens-Funktion kann dann auf den Drehwinkel geschlossen werden. Die anwendungsspezifische integrierte Schaltung kann mindestens einen Tiefpassfilter aufweisen. Der Tiefpassfilter kann eine Grenzfrequenz im Bereich von 50 kHz bis zu 500 kHz, bevorzugt 100 kHz, aufweisen. Die untere Grenzfrequenz kann deutlich geringer ausfallen, da lediglich Offsets kompensiert werden sollen, so dass beispielsweise 0,1 Hz ausreichend wäre. Beispielsweise kann die anwendungsspezifische integrierte Schaltung zunächst die Signale der Empfängerspulen demodulieren und anschließend mittels des Tiefpasses filtern.

Unter einem "Mikrobolometer-Element" kann ein thermischer Sensor zur Detektion von elektromagnetischer Strahlung verstanden werden. Das Mikrobolometer-Element kann eingerichtet sein, um eine Temperatur des rotierenden Elements zu bestimmen. Das Mikrobolometer-Element kann eingerichtet sein zu einer Erfassung der absoluten Temperatur des rotierenden Elements. Das Mikrobolometer-Element kann mindestens ein Pixel, insbesondere ein Pixelarray mit einer Vielzahl von Pixeln aufweisen. Jedes der Pixel kann einen Infrarotabsorber und ein temperatursensitives Bauelement aufweisen. Das Pixel kann ein Substratmaterial und einen Absorber, insbesondere eine Absorberplatte, aufweisen. Der Absorber kann an einer Mehrzahl von Haltearmen über dem Substratmaterial haltend aufgenommen sein. Der Absorber kann beispielsweise eine einfache $SiO_2$-Schicht umfassen. Der Absorber kann mindestens eine Antennenstruktur oder eine plasmonische Struktur aufweisen. Der Absorber kann ein Metamaterial-Perfect-Absorber sein. Eine Herstellung des Mikrobolometer-Elements kann basierend auf der Bereitstellung einer thermisch isolierten Insel, welche den IR-Absorber und das temperatursensitive Bauelement umfasst, erfolgen. Die Haltearme können eingerichtet sein, die thermisch isolierte Insel mit einem Substrat zu verbinden. Das Mikrobolometer-Element kann ein thermoelektrisches Wandlerelement aufweisen, welches ausgewählt ist aus der Gruppe bestehend aus: mindestens ein temperaturabhängiger Widerstand, mindestens ein Halbleiter-Bauelement, insbesondere eine Diode, mindestens einem Thermocouple. Die Haltearme können eingerichtet sein, um elektrische Zuleitungen für das thermoelektrische Wandlerelement bereitzustellen. Die Haltearme können eingerichtet sein, eine mechanische Stabilität zu gewährleisten. Das Verhältnis zwischen Länge und Querschnittsfläche der Haltearme kann im Design derart maximiert werden, dass eine bestmögliche thermische Isolation der Insel gewährleistet werden kann. Das Pixeldesign kann derart sein, dass ein Kompromiss zwischen Absorberfläche und thermischer Entkopplung, also Länge und/oder Querschnittsfläche der Haltearme, des Pixels gefunden wird. Das Pixel kann eingerichtet sein, dass sich bei auf das Pixel treffender Infrarotstrahlung die Temperatur des thermisch isolierten Pixels erhöht. Die thermische Isolation des Pixels kann maßgeblich von einem Aufbau der Haltearme, insbesondere deren Länge und Querschnittsfläche abhängen. Das Mikrobolometer-Element kann eingerichtet sein, um mindestens ein temperaturabhängiges elektrisches Ausgangssignal zu erzeugen. Das temperaturabhängige elektrische Ausgangssignal kann beispielsweise ein Spannungssignal sein, welches proportional zur gemessenen Temperatur ist. Die Temperaturerhöhung des Pixels kann mit dem direkt auf dem Pixel platzierten thermoelektrischen Wandlerelement in das temperaturabhängige elektrische Ausgangssignal transformiert werden. Das Mikrobolometer-Element kann eingerichtet sein, um das temperaturabhängige elektrische Ausgangssignal über mindestens eine elektrische Zuleitung zu der anwendungsspezifischen integrierten Schaltung zu übertragen, insbesondere zu leiten und/oder zu übermitteln. Die Haltearme können derart ausgestaltet sein, dass sie eine elektrische und mechanische Verbindung des Wandlerelementes zu weiteren Bauteilen, insbesondere zu der anwendungsspezifischen integrierten Schaltung, bereitstellen. Die Haltearme können derart ausgestaltet sein, um die thermische Isolation der kompletten Pixelstruktur zu realisieren. Insbesondere können lange und dünne Haltearme verwendet werden. Die Haltearme können weiter derart ausgestaltet sein, dass ein Haltearm mindestens zwei elektrisch leitende Schichten aufweist und ein anderer Haltearm vollständig aus einem Nichtleiter aufgebaut ist. Um eine Verkippung der thermisch isolierten Insel in Folge des Stresses in den Haltearmen zu kompensieren, können Verbindungspunkte zwischen Haltearmen und Insel symmetrisch zum Schwerpunkt der Insel angeordnet sein. Beispielsweise bei einer rechteckigen Inselform können Verbindungspunkte in diagonal gegenüberliegenden Ecken angeordnet sein. Die Haltearme können so dünn und so schmal wie möglich ausgestaltet werden, um eine thermische Ableitung so gering wie möglich zu halten. Um eine höhere mechanische Stabilität bei großen Längen der Haltearme zu gewährleisten, können die Haltearme bevorzugt ausgestaltet sein, dass deren Breiten nicht wesentlich größer sind als deren Höhen. Besonders bevorzugt kann die Höhe der Haltearme größer sein als die Breite. Unter einer Länge des Haltearms kann eine Abmessung oder Weglänge des Haltearms, beispielsweise entlang der Mäanderstruktur des Haltearms, in einer Ebene, beispielsweise bei einer Draufsicht auf das Pixel, verstanden werden. Unter einer Breite des Haltearms kann eine Abmessung in Richtung senkrecht zur Länge des Haltearms in derselben Ebene verstanden werden. Unter einer Höhe oder Dicke des Haltearms kann eine Abmessung in Richtung senkrecht zur Länge und Breite des Haltearms verstanden werden. Die Querschnittsfläche des Haltearms kann durch die Breite und Dicke des Haltearms definiert sein. Mit dem beschriebenen Verfahren können Haltearme möglich sein, welche dünner sind als eine Dicke der Insel und des Absorbers. Unter einer Dicke der Insel kann eine Abmessung in der Richtung des Schichtaufbaus und somit senkrecht zu den einzelnen Schichtebenen der Insel verstanden werden. Dadurch kann eine Reduktion der thermischen Kopplung möglich sein. Die Haltearme können in einer rechtwinkligen Spirale um die Insel oder können mäanderförmig auf zwei, bevorzugt den längeren, Seiten der Insel angeordnet sein. So kann gewährleistet werden, dass der zur Verfügung stehende Platz optimal für Absorption auf dem Absorber und thermische Entkopplung genutzt werden kann. In beiden Fällen können die Längen, Breiten und Dicken der Haltearme gemeinsam mit einer Fläche der Absorberstruktur derart ausgestaltet sein, dass ein Optimum der Temperaturerhöhung auf der Insel entsteht. Bevorzugt können alle Zuleitungen in einem ersten Haltearm übereinander, jeweils durch eine dünne isolierende Schicht voneinander getrennt, angeordnet werden. Ein zweiter Haltearm kann lediglich eingerichtet sein zu der oben beschriebenen mechanischen Stabilisierung. Um dem Problem einer höheren thermischen Trägheit in Folge einer höheren thermischen Entkopplung der Insel entgegenzuwirken, kann die Insel mit Löchern versehen werden, durch die ein Ätzangriff auf das darunter liegende Silizium möglich ist. Dadurch kann sich die Masse der Insel verringern und auch eine Aufteilung des Siliziums in mehrere elektrisch voneinander isolierte Blöcke kann möglich sein, durch welche eingebrachte Wandlerelemente elektrisch getrennt werden können. Die Löcher können hinsichtlich ihrer lateralen Abmessungen derart ausgestaltet sein, dass die lateralen Abmessungen kleiner sind als die Wellenlänge der einfallenden Infrarotstrahlung, um die Absorption im Absorber nicht zu beeinflussen.

Die Temperaturmessung, insbesondere die Absoluttemperaturmessung, mit dem Mikrobolometer-Element kann durch eine Rotation des Geberrads eines weiter unten beschriebenen Sensorsystems erfolgen. Das Geberrad kann als so genannter Chopper für das Mikrobolometer-Element wirken. Das Mikrobolometer-Element kann eingerichtet sein, periodisch die Temperatur des Geberrads erfassen, wenn ein Flügel vor dem Mikrobolometer-Element steht, und in der Zwischenzeit die Temperatur des aus Sicht des Mikrobolometer-Elements dahinter liegenden Bereiches (z.B. eines B-Lagers). Aus der Drehwinkelinformation ist bekannt, wann der Flügel vor dem Mikrobolometer-Element ist und wann nicht. Zu Beginn der Laufzeit kann davon ausgegangen werden, dass beide Geberrad und dahinter liegender Bereich, dieselbe Temperatur haben. Dieselbe Temperatur T kann somit gemäß

$$p_{th,\lambda} = \epsilon \, \frac{2\pi h c^2}{\lambda^5} \left[ \exp\left(\frac{hc}{\lambda k_b T}\right) - 1 \right]^{-1},$$

wobei $p_{th,\lambda}$ die spektrale Leistungsdichte, h die Planck Konstante, c die Lichtgeschwindigkeit, $k_B$ die Boltzmann Konstante, T die gemessene Temperatur, und ε die Emissivität ist, für zwei verschiedene Emissivitäten, nämlich des Geberrads $\varepsilon_{Geberrad}$ und des dahinter liegenden Bereichs $\varepsilon_{Bereich}$, bestimmt werden. Daraus kann wiederum die Emissivität $\varepsilon_{Geberrad}$ des Geberrads bestimmt werden. So kann eine Absoluttemperaturinformation ableitbar sein. Ein "Einlernen" des Mikrobolometer-Elements, also insbesondere eine Bestimmung der Emissivität $\varepsilon_{Geberrad}$ des Geberrads, kann beispielsweise bei einer Kalibrierung des induktiven Positionssensors bei einem Zusammenbau der Maschine erfolgen. Weiterhin können auch zur Laufzeit entsprechende Kalibrierungen vorgenommen werden. Die Bestimmung der Emissivität aus der gemessenen Temperatur des Geberrads und des dahinter liegenden Bereichs kann beispielsweise mittels einer, weiter unten beschriebenen, externen Auswerteeinheit erfolgen.

Die anwendungsspezifische integrierte Schaltung ist eingerichtet , mindestens eine Temperaturinformation in die Signale der Empfängerspulen zu kodieren. Unter einer Temperaturinformation kann eine beliebige Information über die mit dem Mikrobolometer-Element bestimmten Temperatur verstanden werden, insbesondere einen Wert oder eine Höhe der gemessenen Temperatur. Unter einer "Kodierung" kann ein Versehen der Signale der Empfängerspulen mit beispielsweise mindestens einem temperaturabhängigen Signal, mindestens einem temperaturabhängigen Offset, mindestens einem temperaturabhängigen Verstärkungsfaktor verstanden werden. Die anwendungsspezifische integrierte Schaltung weist mindestens einen Verstärker fauf. Der Verstärker ist eingerichtet, um die Signale der Empfängerspulen, insbesondere die gefilterten Signale, zu verstärken. Unter "Verstärken" kann eine Erhöhung einer Amplitude eines Signals verstanden werden. Der Verstärker ist eingerichtet , um die Amplituden der Signale der Empfängerspulen, insbesondere der gefilterten Signale, mit einem Verstärkungsfaktor zu verstärken, insbesondere zu multiplizieren. Unter einem "Verstärkungsfaktor" kann eine positive reelle Zahl verstanden werden. Die anwendungsspezifische integrierte Schaltung ist eingerichtet, um das temperaturabhängige elektrische Ausgangssignal des Mikrobolometer-Elements, insbesondere des thermoelektrischen Wandlerelements, zu erfassen. Die anwendungsspezifische integrierte Schaltung ist eingerichtet, um aus dem temperaturabhängigen elektrischen Ausgangssignal mindestens einen Verstärkungsfaktor zu bestimmen. Der Verstärkungsfaktor ist proportional zu der mit dem Mikrobolometer-Element bestimmten Temperatur.

Anschließend, nach der Verstärkung, können die Ausgangssignale von der anwendungsspezifischen integrierten Schaltung, beispielsweise über mindestens eine elektrische Signalleitung, insbesondere ein Kabel, an eine Auswerteeinheit, insbesondere eine von dem Schaltungsträger getrennt ausgestaltete Auswerteeinheit, übertragen werden, so dass keine zusätzliche Signalleitung zwischen Mikrobolometer-Element und Auswerteeinheit notwendig ist.

Zusätzlich kann die anwendungsspezifische integrierte Schaltung mindestens einen Addierer aufweisen, welcher eingerichtet ist, die Signale der Empfängerspulen, insbesondere die gefilterten Signale, mit einem Offset zu beaufschlagen. Unter einem Addierer kann ein elektronisches Bauteil verstanden werden, welches eingerichtet ist, die Signale der Empfängerspulen jeweils mit einem Offset zu beaufschlagen. Unter einer Beaufschlagung mit einem Offset kann eine Addition mit dem Offset und/oder eine Addition von Vielfachen des Offsets verstanden werden. Unter einem "Offset" kann ein zu addierendes Signal, insbesondere ein Spannungssignal verstanden werden, welches abhängig von der mit dem Mikrobolometer-Element gemessenen Temperatur ist. Das zu addierende Signal kann direkt aus dem Mikrobolometer-Element stammen und kann eine Spannung, welche proportional zu gemessenen Temperatur ist, repräsentieren. Aufgrund der geringen Dynamik der Rotortemperatur kann der Offset durch Mittelwertbildung über einige zehn bis einige tausend Umdrehungen bestimmt werden und sich beispielsweise nur mit einer Updaterate von 0,1 Hz bis 10 Hz ändern. Vor der Beaufschlagung mit dem Offset können die Signale der Empfängerspulen verstärkt werden, beispielsweise von dem oben beschriebenen Verstärker der anwendungsspezifischen integrierten Schaltung. Anschließend, nach der Addition, können die Ausgangssignale von der anwendungsspezifischen integrierten Schaltung, beispielsweise über mindestens eine elektrische Signalleitung, insbesondere ein Kabel, an eine Auswerteeinheit, insbesondere eine von dem Schaltungsträger getrennt ausgestaltete Auswerteeinheit, übertragen werden, so dass keine zusätzliche Signalleitung zwischen Mikrobolometer-Element und Auswerteeinheit notwendig ist.

Der induktive Positionssensor kann mindestens ein Kontaktelement aufweisen. Der induktive Positionssensor kann mit der Auswerteeinheit mittels des Kontaktelements verbindbar sein. Das Kontaktelement kann ausgewählt sein aus der Gruppe bestehend aus: mindestens eine Bohrung für Rammkontakte, mindestens ein aufgelöteter Stecker, mindestens ein Kontaktpad. Der induktive Positionssensor kann eine Verpackung aufweisen, insbesondere um den induktiven Positionssensor mit einem Spanschutz zu versehen. Die Verpackung kann mindestens ein Verbindungselement aufweisen. Der induktive Positionssensor kann mittels des Verbindungselements an einer weiteren Vorrichtung befestigbar sein. Diese kann durch eines oder mehrere der Verfahren Direct-injection-molding, Transfermolden mit Duroplast, Thermoplastspritzen oder durch Vergießen realisiert werden. Die Verpackung kann alle Komponenten des induktiven Positionssensors ganz oder teilweise umgeben. Sie kann bevorzugt Bohrungen bzw. Aussparungen aufweisen, durch welche der induktive Positionssensor mit einer Schraubverbindung beispielsweise an einem B-Lagerschild der weiteren Vorrichtung befestigt werden kann. Alternativ oder zusätzlich kann der induktive Positionssensor auch mit Clips, einer Klebverbindung oder weiteren Verfahren, beispielsweise am B-Lagerschild, angebracht werden.

In einem weiteren Aspekt wird ein Sensorsystem unter anderem zur Bestimmung mindestens einer Rotationseigenschaft eines um mindestens eine Rotationsachse rotierenden Elements vorgeschlagen. Das Sensorsystem weist mindestens einen erfindungsgemäßen induktiven Positionssensor nach einer der oben oder weiter unten beschriebenen Ausführungsformen auf. Dementsprechend kann für Definitionen und optionale Ausgestaltungen weitgehend auf die Beschreibung des induktiven Positionssensors verwiesen werden. Das Sensorsystem weist mindestens ein mit dem rotierenden Element verbindbares Geberrad auf. Das Sensorsystem weist mindestens eine Auswerteeinheit auf.

Unter einem "System" kann eine beliebige Vorrichtung verstanden werden, welche mindestens zwei Komponenten aufweist. Unter einem "Geberrad" kann im Rahmen der vorliegenden Erfindung grundsätzlich ein beliebiges mit dem rotierenden Element verbindbares Bauelement verstanden werden, das eingerichtet ist, bei Verbindung mit dem rotierenden Element pro Umdrehung des rotierenden Elements mindestens ein messbares Signal, insbesondere eine Magnetfeldänderung, zu bewirken. Das Geberrad kann beispielsweise permanent oder reversibel mit dem rotierenden Element verbunden oder verbindbar sein oder kann auch einstückig mit dem rotierenden Element ausgebildet oder in das rotierende Element integriert sein. Das Geberrad kann ein Geberradprofil aufweisen. Unter einem "Geberradprofil" kann im Rahmen der vorliegenden Erfindung grundsätzlich eine Gesamtheit von Profilelementen und von Zwischenräumen, die zwischen den Profilelementen angeordnet sind, verstanden werden. Unter einem "Profilelement" des Geberrads kann im Rahmen der vorliegenden Erfindung grundsätzlich eine beliebige Ausformung der Kontur des Geberrads verstanden werden, insbesondere eine Ausbuchtung, beispielsweise eine stiftförmige, eine zahnförmige oder eine zackenförmige Ausbuchtung, oder eine Einkerbung oder eine Aussparung, beispielsweise ein Loch.

Das Geberrad kann beispielsweise ausgestaltet sein, um je nach seiner Stellung Bereiche einer Empfängerspulenstruktur "abzuschatten". Dadurch kann eine Kopplung zwischen einer Sendespulenstruktur und den Empfängerspulen drehwinkelabhängig beeinflusst werden. Ein typischer Wertebereich eines Kopplungsfaktors kann beispielsweise -0,3 bis +0,3 betragen. Unter einem Koppelfaktor kann dabei insbesondere ein Amplitudenverhältnis zwischen einem Empfangssignal und einem Sende- oder Erregersignal verstanden werden. Der Koppelfaktor kann insbesondere sinusförmig mit dem Drehwinkel verlaufen.

Die Spulenanordnung kann das Geberrad oder mindestens ein Kreissegment des Geberrads im Wesentlichen kreissegmentförmig oder kreisförmig umgeben. Insbesondere kann die Spulenanordnung, insbesondere die auf dem Schaltungsträger angeordnete Spulenanordnung, in mindestens einer Winkelposition des Geberrads mindestens ein Profilelement und mindestens einen Zwischenraum zwischen zwei Profilelementen des Geberrads abdecken.

Das Sensorsystem, insbesondere der induktive Positionssensor, kann eingerichtet sein, eine induktive Kopplung und/oder eine Änderung einer induktiven Kopplung zwischen der Erregerspule und der mindestens einen Empfängerspule zu erfassen. Insbesondere kann das Sensorsystem eingerichtet sein, die durch eine Bewegung und/oder eine Position des Geberrades bewirkte induktive Kopplung und/oder die durch eine Bewegung und/oder eine Position des Geberrades bewirkte Änderung der induktiven Kopplung zwischen der Erregerspule und den Empfängerspulen zu erfassen. Hierfür weist das Sensorsystem die Auswerteeinheit auf. Insbesondere kann die Auswerteeinheit mindestens eine Auswerteschaltung aufweisen. Insbesondere kann die Auswerteschaltung eingerichtet sein, die Signale des Positionssensors auszuwerten. Bei der Auswerteschaltung kann es sich beispielsweise um einen Prozessor handeln. Die Auswerteeinheit kann insbesondere getrennt von dem Schaltungsträger ausgestaltet sein und kann mit dem Schaltungsträger über mindestens eine Verbindung, beispielsweise ein Kabel, verbindbar sein. Unter "einer Auswerteeinheit" kann dabei allgemein eine elektronische Vorrichtung verstanden sein, welche eingerichtet ist, um von dem induktiven Positionssensor, insbesondere dem ASIC und/oder dem ersten und/oder zweiten weiteren elektronischen Bauelement erzeugte Signale auszuwerten. Beispielsweise können zu diesem Zweck eine oder mehrere elektronische Verbindungen zwischen dem induktiven Positionssensor und der Auswerteeinheit vorgesehen sein. Die Auswerteeinheit kann beispielsweise mindestens eine Datenverarbeitungsvorrichtung umfassen, beispielsweise mindestens einen Computer oder Mikrocontroller. Die Datenverarbeitungsvorrichtung kann einen oder mehrere flüchtige und/oder nicht flüchtige Datenspeicher aufweisen, wobei die Datenverarbeitungsvorrichtung beispielsweise programmtechnisch eingerichtet sein kann, um den induktiven Positionssensor anzusteuern. Die Auswerteeinheit kann weiterhin mindestens eine Schnittstelle umfassen, beispielsweise eine elektronische Schnittstelle und/oder eine Mensch-Maschine-Schnittstelle wie beispielsweise eine Eingabe-/Ausgabe-Vorrichtung wie ein Display und/oder eine Tastatur. Die Auswerteeinheit kann beispielsweise zentral oder auch dezentral aufgebaut sein. Auch andere Ausgestaltungen sind denkbar.

Das Geberrad kann rotationssymmetrisch ausgestaltet sein. Das Geberrad kann eine identische Anzahl an elektrisch leitfähigen Flügeln und elektrisch nicht oder weniger leitfähigen Flügeln und/oder Aussparungen aufweisen. Die elektrisch leitfähigen Flügel können einen ersten Öffnungswinkel $\alpha$ und die elektrisch nicht oder weniger leitfähigen Flügel und/oder die Aussparungen einen zweiten Öffnungswinkel $\beta$ aufweisen. Eine Summe des ersten und des zweiten Öffnungswinkel kann einem vollen Winkelmessbereich des induktiven Positionssensors entsprechen. Der erste und der zweite Öffnungswinkel können identisch oder verschieden sein. Das Geberrad kann an dem rotierenden Element mittels einer Schraub- und/oder Klebeverbindung befestigt sein.

Die Auswerteeinheit ist eingerichtet ist, um aus Signalen der Empfängerspulen auf eine Winkelposition $\Phi$ des Geberrads zu schließen. Das Sensorsystem kann insbesondere eingerichtet sein, um aus der durch die Bewegung und/oder durch eine Position des Geberrads bewirkten Änderung der induktiven Kopplung zwischen der Erregerspule und den Empfängerspulen eine absolute oder relative Winkelposition des rotierenden Elements zu bestimmen. Unter einer "relativen Winkelposition" kann dabei grundsätzlich eine Position bezüglich einer durch die Empfängerspulen definierten Periode verstanden werden. Insbesondere kann die Auswerteschaltung derart eingerichtet sein, um mindestens ein Quotientensignal mindestens zweier Signale mindestens zweier Empfängerspulen zu generieren. Beispielsweise kann für die Berechnung der Winkelposition $\Phi$ aus zwei von zwei Empfängerspulen generierten Signalen die Gesetzmäßigkeit $\tan\Phi = \sin\Phi / \cos\Phi$ verwendet werden. Beispielsweise kann für die Berechnung der Winkelposition $\Phi$ aus drei von drei Empfängerspulen generierten Signalen die Clarke-Transformation verwendet werden.

Das Sensorsystem ist eingerichtet, mindestens eine Temperatur des um die Rotationsachse rotierenden Elements zu bestimmen. In der Auswerteeinheit können die Ausgangssignale des ASIC bevorzugt digitalisiert und weiterverarbeitet werden. Die Auswerteeinheit kann mindestens einen Subtrahierer aufweisen. Der Subtrahierer kann eingerichtet sein, um mindestens einen Offset von Ausgangssignalen des induktiven Positionssensors zu bestimmen und daraus die Temperatur des rotierenden Elements abzuleiten. Der Subtrahierer kann eingerichtet sein, den Offset anschließend von dem jeweiligen Ausgangssignal zu subtrahieren. Die Bestimmung des Offsets kann durch Mittelwertbildung über eine ganzzahlige Anzahl an Perioden, durch Auswertung der 0. Harmonischen einer Fouriertransformation oder über min/max Schätzer erfolgen. Der Subtrahierer kann mindestens eine elektronische Schaltung, beispielsweise mindestens einen Operationsverstärker und/oder mindestens einen Differenzverstärker, zur Durchführung der Bestimmung und Subtraktion des Offsets aufweisen und/oder die Auswerteeinheit kann programmtechnisch ausgestaltet sein zur Durchführung der Bestimmung und Subtraktion des Offsets. Alternativ oder zusätzlich kann die Auswerteeinheit mindestens einen Dividierer aufweisen, wobei der Dividierer eingerichtet ist, um mindestens einen Verstärkungsfaktor von Ausgangssignalen des induktiven Positionssensors zu bestimmen und daraus die Temperatur abzuleiten. Beispielsweise anschließend, können die Signale mit einem oder mehreren Verstärkern um Verstärkungsfaktoren verstärkt werden, derart dass die Amplituden möglichst identisch sind. Die Auswerteinheit kann mindestens einen Verstärker aufweisen, welcher eingerichtet ist, um die Ausgangssignale, insbesondere die um den Offset subtrahierten Ausgangssignale, zu normalisieren. Die Auswerteeinheit kann mindestens einen Dividierer aufweisen, welcher eingerichtet ist, mindestens ein Quotientensignal aus den Ausgangssignalen der anwendungsspezifischen integrierten Schaltung zu bestimmen. Unter einem Dividierer kann ein elektronisches Bauteil verstanden werden, welches eingerichtet ist, die Ausgangssignale, insbesondere die normalisierten Ausgangssignale, zu dividieren. Unter einem Quotientensignal kann hierbei ein Ergebnis der Division der Ausgangssignale verstanden werden. Die Division kann eine Division der Ausgangssignale, insbesondere der Offset-subtrahierten Ausgangssignale, und/oder eine Division von Vielfachen der Ausgangssignale, insbesondere der Offset-subtrahierten Ausgangssignale, und/oder eine Division von Linearkombinationen der Ausgangssignale, insbesondere der Offset-subtrahierten Ausgangssignale, umfassen.

Die Auswerteeinheit kann mindestens eine Arkusfunktionseinheit aufweisen, welche eingerichtet ist, um die Rotationseigenschaft des um die Rotationsachse rotierenden Elements durch Bestimmen eines Arkustangens des Quotientensignals zu bestimmen. Unter einer Arkusfunktionseinheit kann eine Vorrichtung verstanden werden, beispielsweise ein elektronisches Bauteil und/oder ein Prozessor, welches eingerichtet ist, einen Arkustangens des Quotientensignals zu bestimmen. Beispielsweise kann bei einer Verwendung von zwei Empfängerspulen eine der Empfängerspulen ein Signal sin Φ und die andere Empfängerspule ein Signal cos Φ generieren, wobei Φ die Winkelposition ist. Wie oben ausgeführt kann die Berechnung von Φ durch Bestimmen von $\tan\Phi = \sin\Phi/\cos\Phi$ und Bestimmen des Arkustangens erfolgen.

Die Auswerteeinheit kann weitere Module aufweisen, wie beispielsweise mindestens einen Filter, welcher eingerichtet ist, die Ausgangssignale der anwendungsspezifischen integrierten Schaltung zu filtern.

Das Sensorsystem kann ein einzelnes Geberrad oder auch eine Vielzahl Geberräder umfassen. Insbesondere kann das Sensorsystem zwei Geberräder umfassen. Insbesondere können die mindestens zwei Geberräder bezüglich der Rotationsachse zueinander versetzt angeordnet sein, also beispielsweise mit einem axialen Versatz. Die mindestens zwei Geberräder können gleiche oder insbesondere auch unterschiedliche Geberradprofile aufweisen.

In einem weiteren Aspekt der vorliegenden Erfindung wird ein Verfahren zur Bestimmung mindestens einer Temperatur und mindestens einer Rotationseigenschaft eines um mindestens eine Rotationsachse rotierenden Elements vorgeschlagen. Das Verfahren umfasst die Verwendung mindestens eines Sensorsystems. Das Verfahren umfasst die folgenden Schritte, bevorzugt in der angegebenen Reihenfolge. Das Verfahren umfasst zusätzlich zu den genannten Verfahrensschritten, auch weitere Verfahrensschritte, wie in den unabhängigen Ansprüchen definiert. Die

Verfahrensschritte sind unter anderem:

- Aufnehmen mindestens zweier induktiver Signale mittels der Empfängerspulen eines induktiven Positionssensors des Sensorsystems;
- Erzeugen mindestens eines temperaturabhängigen elektrischen Ausgangssignals mittels eines Mikrobolometer-Elements des induktiven Positionssensors;
- Bestimmen zweier kombinierter Signale aus jeweils einem induktiven Signal und dem temperaturabhängigen elektrischen Ausgangssignal;
- Auswertung der kombinierten Signale und Ermittlung der Rotationseigenschaft und Temperatur mittels der kombinierten Signale.

Das Verfahren erfolgt unter Verwendung eines Sensorsystems gemäß der vorliegenden Erfindung, also gemäß einer der oben genannten Ausführungsformen oder gemäß einer der unten noch näher beschriebenen Ausführungsformen. Dementsprechend kann für Definitionen und optionale Ausgestaltungen weitgehend auf die Beschreibung des Sensorsystems und des induktiven Positionssensors verwiesen werden. Auch andere Ausgestaltungen sind jedoch grundsätzlich möglich, solange sie unter den Anspruchswortlaut der angehängten Ansprüche fallen.

Unter einem kombinierten Signal, auch als Ausgangssignal des ASIC bezeichnet, kann eine Kombination der Signale der Empfängerspulen und des temperaturabhängigen elektrischen Ausgangssignals des Mikrobolometer-Elements verstanden werden, beispielsweise durch die oben beschriebene Addition der Signale der Empfängerspulen jeweils mit einem Offset und/oder durch die oben beschriebene Verstärkung mit mindestens einem Verstärkungsfaktor.

Ferner wird im Rahmen der vorliegenden Erfindung ein Computerprogramm vorgeschlagen, das bei Ablauf auf einem Computer oder Computer-Netzwerk das erfindungsgemäße Verfahren in einer seiner Ausgestaltungen ausführt. Weiterhin wird im Rahmen der vorliegenden Erfindung ein Computerprogramm mit Programmcode-Mitteln vorgeschlagen, um das erfindungsgemäße Verfahren in einer seiner Ausgestaltungen durchzuführen, wenn das Programm auf einem Computer oder Computer- Netzwerk ausgeführt wird. Insbesondere können die Programmcode-Mittel auf einem computerlesbaren Datenträger gespeichert sein. Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann. Auch wird im Rahmen der vorliegenden Erfindung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden. Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Vorteile der Erfindung

Die vorgeschlagene Vorrichtung und das vorgeschlagene Verfahren weisen gegenüber bekannten Vorrichtungen und Verfahren zahlreiche Vorteile auf. Insbesondere ist es möglich, ein EMV robustes Sensorkonzept bereitzustellen. Weiter kann ein einfaches und kostengünstiges Geberrad verwendet werden. Das Geberrad kann als so genannter Chopper für den Temperatursensor wirken, so dass eine Absoluttemperaturinformation ohne Nutzung eines Multicolor Bolometerprinzips umgesetzt werden kann. Das Messprinzip zeigt weiter keinen Einfluss von Fremdmagnetfeldern, beispielsweise in Folge von hohen Strömen innerhalb von Kabeln, die in Sensornähe angeordnet sind. Das Messprinzip ist aufgrund einer hohen Trägerfrequenz praktisch nicht drehzahlbegrenzt. Keine zusätzliche Signalleitungen für eine Übertragung der Temperaturinformation werden benötigt, da diese im Drehwinkelsignal kodiert wird.

Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:

| | |
|---|---|
| Figur 1 | eine schematische Darstellung eines Ausführungsbeispiels eines erfindungsgemäßen Sensorsystems; |
| Figur 2 | eine schematische Darstellung eines Ausführungsbeispiels eines induktiven Positionssensors; |
| Figur 3 | ein Ausführungsbeispiel eines Geberrads; |
| Figur 4 | einen erfindungsgemäßen Aufbau eines ASICs; |
| Figur 5 | Signalformen des erfindungsgemäßen Sensorsystems; |
| Figur 6 | ein Ausführungsbeispiel einer Auswerteeinheit; und |
| Figur 7A und B | Signalformen für zwei Temperaturen. |

Ausführungsformen der Erfindung

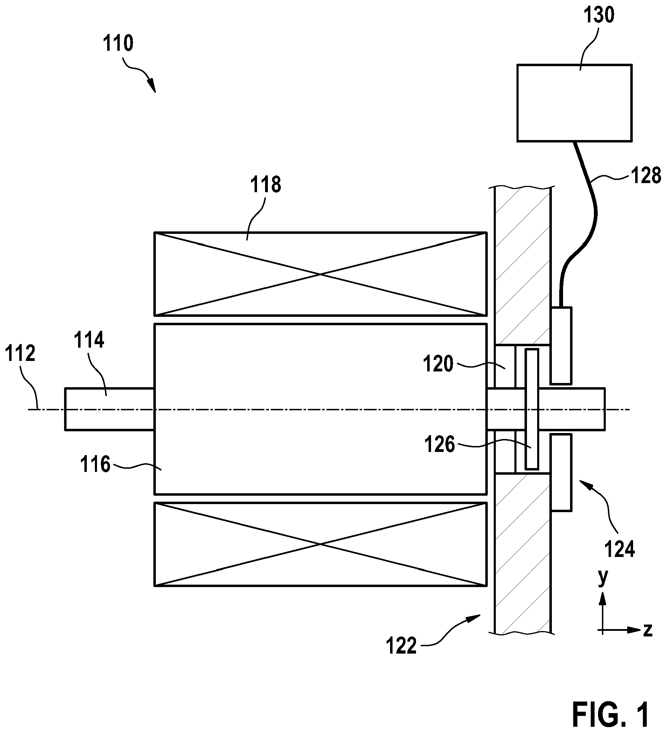

In Figur 1 ist ein Ausführungsbeispiel eines Sensorsystems 110 zur Bestimmung mindestens einer Rotationseigenschaft eines um mindestens eine Rotationsachse 112 rotierenden Elements 114 gezeigt. Das Sensorsystem 110 kann insbesondere zum Einsatz im Kraftfahrzeug eingerichtet sein. Insbesondere kann das Sensorsystem 110 zur Erfassung mindestens einer Rotationseigenschaft einer Nockenwelle eingerichtet sein. Beispielsweise kann das Sensorsystem 110 eingerichtet sein, eine Winkelposition der Nockenwelle zu erfassen. Dementsprechend kann es sich bei dem rotierenden Element 114 beispielsweise um eine Welle handeln. Im dargestellten Fall einer permanent erregten Synchronmaschine kann die Welle einen Permanentmagneten 116 tragen. Zylinderförmig um diesen Permanentmagneten 116 kann ein Statorspulenpaket 118 angeordnet sein. Ein Abtrieb kann in negativer z-Richtung angeordnet sein und ist nicht weiter dargestellt. Auf der dem Abtrieb entgegengesetzten Seite kann ein B-Lager 120 angeordnet sein, welches die Achse 114 aufnimmt. Das Sensorsystem 110 weist mindestens einen induktiven Positionssensor auf 124. Das B-Lager 120 kann mit einem B-Lagerschild 122 verbunden sein, welches den induktiven Positionssensor 124 hält. Das Sensorsystem 110 weist mindestens ein mit dem rotierenden Element 114 verbindbares Geberrad 126 auf. Zwischen B-Lager 120 und induktiven Positionssensor 124 kann das Geberrad 126 angeordnet sein, welches mit der Welle verbunden ist und sich mit dieser mit dreht. Es kann davon ausgegangen werden, dass das Geberrad 126 dieselbe Temperatur wie der Permanentmagnet 116 aufweist. Das Sensorsystem 110 weist mindestens eine Auswerteeinheit 130 auf. Beispielsweise über ein Kabel 128 kann der induktive Positionssensor 124 mit der Auswerteeinheit 130 verbunden sein. Die Auswerteeinheit 130 kann eine Spannungsversorgung des induktiven Positionssensors 124 bereitstellen. Die Auswerteeinheit 130 kann Ausgangssignale des induktiven Positionssensors 124 empfangen und aus diesen eine Rotorposition und Rotortemperatur berechnen.

Das Sensorsystem 110 kann, neben den in Figur 1 dargestellten Elementen, weiterhin ein oder mehrere zusätzliche Elemente umfassen, beispielsweise ein oder mehrere in den Figuren nicht dargestellte weitere Funktionselemente, wie beispielsweise Elektroden, Elektrodenzuleitungen und Kontakte, mehrere Schichten, Heizelemente oder andere Elemente.

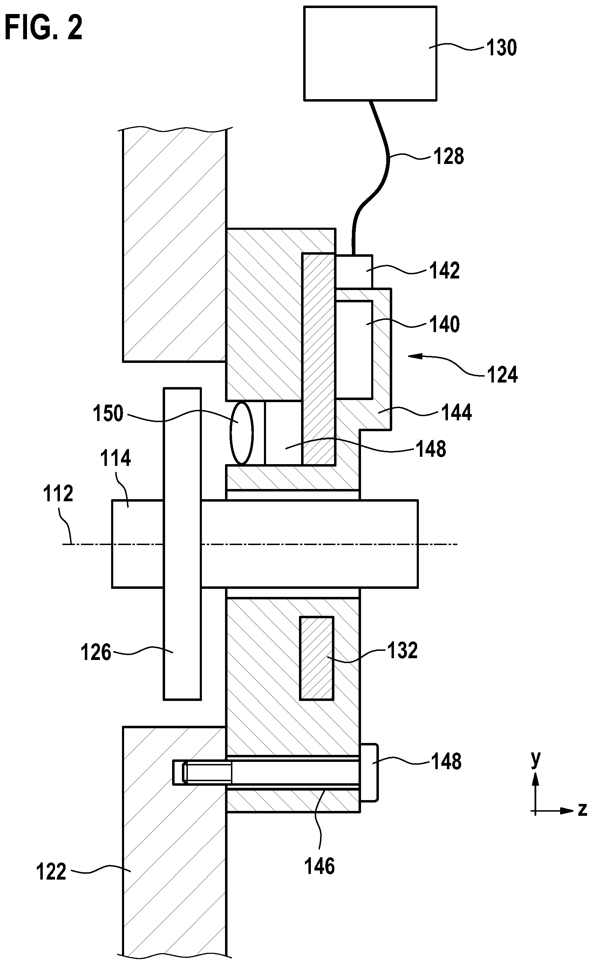

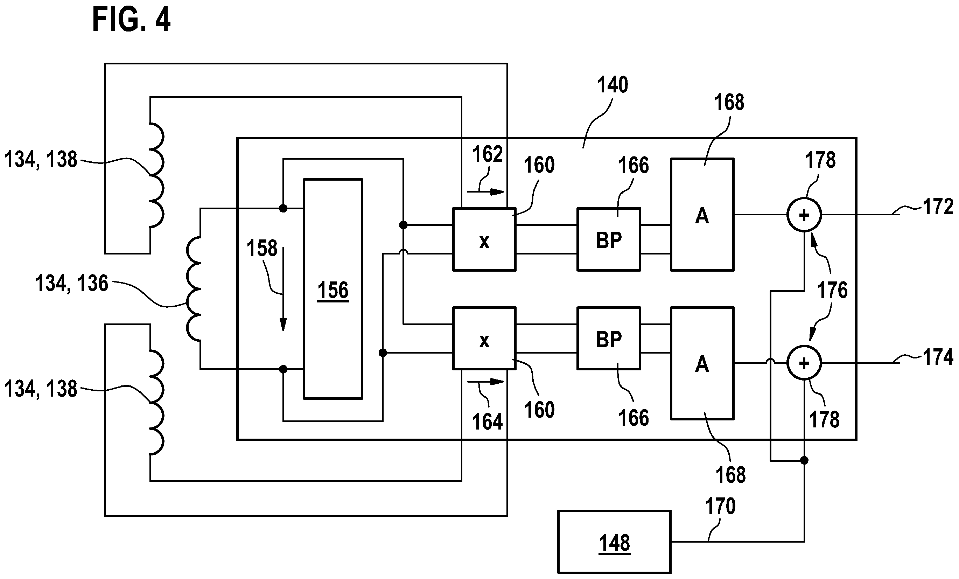

Eine Detailansicht des induktiven Positionssensors 124 zeigt Figur 2. Der induktive Positionssensor 124 umfasst mindestens einen Schaltungsträger 132. Der Schaltungsträger 132 kann beispielsweise eine Leiterplatte aufweisen, welche im Wesentlichen kreisringförmig das rotierende Element 114 umläuft und dabei bevorzugt einen Winkelbereich von 360° abdeckt. Der induktive Positionssensor 124 umfasst mindestens eine, hier nicht dargestellte, Spulenanordnung 134, welche auf dem Schaltungsträger 132 angeordnet ist. Die Spulenanordnung 134 umfasst mindestens eine Erregerspule 136 und mindestens zwei Empfängerspulen 138, siehe beispielsweise Figur 4. Der induktive Positionssensor umfasst mindestens eine anwendungsspezifische integrierte Schaltung (ASIC) 140, welche eingerichtet ist, um ein Erregersignal für die Erregerspule 136 bereitzustellen. Die anwendungsspezifische integrierte Schaltung 140 ist eingerichtet, um von den Empfängerspulen 138 erzeugte Signale zu verarbeiten und als Ausgangssignale, beispielsweise der Auswerteeinheit 130, bereitzustellen. Der induktive Positionssensor 124 weist mindestens ein Kontaktelement 142 auf, an welchem das Kabel 128 befestigt werden kann. Das Kontaktelement 142 kann eine Bohrung für Rammkontakte, ein aufgelöteter Stecker oder Pads sein, mit denen das Kabel 128 mit dem Schaltungsträger 132 durch einen Lötprozess verbunden werden kann.

Der induktive Positionssensor 124 kann eine Verpackung 144 aufweisen. Die Verpackung 144 kann erlauben den induktiven Positionssensor 124 mit einem Spanschutz zu versehen und eine ausreichend hohe mechanische Festigkeit zu gewährleisten. Die Verpackung 144 kann durch eines oder mehrere der Verfahren Direct-injection-molding, Transfermolden mit Duroplast, Thermoplastspritzen oder durch Vergießen realisiert werden. Die Verpackung 144 kann alle Komponenten des induktiven Positionssensors 124 ganz oder teilweise umgeben. Die Verpackung 144 kann mindestens ein Verbindungselement 146, bevorzugt Bohrungen und/oder Aussparungen, aufweisen, durch die der induktive Positionssensor 124, beispielsweise mit einer Schraubverbindung 146 am B-Lagerschild 122 befestigt werden kann. Alternativ oder zusätzlich kann der induktive Positionssensor 124 auch mit Clips, einer Klebverbindung oder weiteren Verfahren am B-Lagerschild 122 angebracht werden.

Der induktive Positionssensor 124 weist mindestens ein Mikrobolometer-Element 148 auf, welches auf dem Schaltungsträger 132 angeordnet ist. Auf der dem Geberrad 126 zugewandten Seite des induktiven Positionssensors 124 kann das Mikrobolomenter-Element 148 angeordnet sein. Der induktive Positionssensor 124 kann eine Optik 150 aufweisen. Das Mikrobolomenter-Element 148 kann mit der in die Verpackung 144 integrierten Optik 150 radial innerhalb der radialen Ausdehnung des Geberrads 126 angeordnet sein. Sollte die Verpackung 144 des induktiven Positionssensors 124 im Ferninfrarotbereich transparent sein, kann das Mikrobolomenter-Element 148 auch komplett von der Verpackung 144 umschlossen werden. Das Kabel 128 kann zur Spannungsversorgung des ASICs 140 und des Mikrobolomenter-Elements 148 sowie dem Übertragen der Empfängerspulensignale zu der Auswerteeinheit 130 dienen.

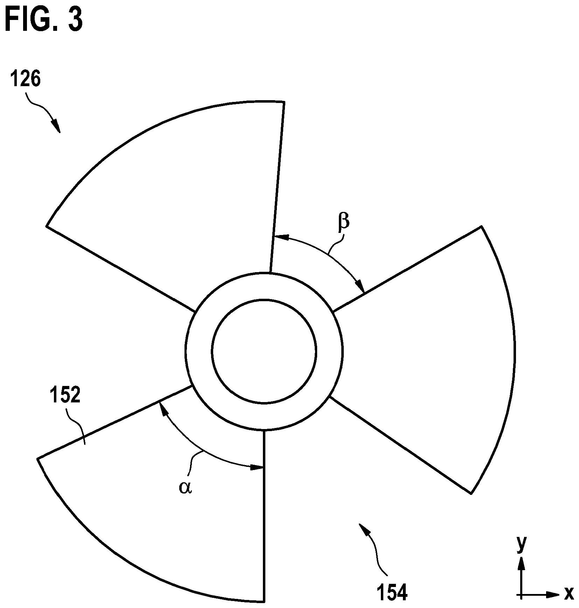

Ein erfindungsgemäßes Ausführungsbeispiel eines Geberrads 126 ist in Figur 3 dargestellt. Das Geberrad 126 kann rotationssymmetrisch ausgestaltet sein. Das Geberrad 126 kann eine identische Anzahl an elektrisch leitfähigen Flügeln 152 mit einem ersten Öffnungswinkel α und elektrisch nicht oder weniger leitfähigen Flügeln und/oder Aussparungen 154 mit einem zweiten Öffnungswinkel β aufweisen. Eine Summe des ersten und des zweiten Öffnungswinkels kann einem vollen Winkelmessbereich 6 des induktiven Positionssensors 124 entsprechen. Der erste und der zweite Öffnungswinkel können identisch oder verschieden groß sein. Bevorzugt kann eine Ausgestaltung mit α = β sein, wobei α dem halben Winkelmessbereich 6 entspricht. In einer weiteren Ausführungsform kann α auch kleiner sein, solange die Bedingung $\alpha + \beta = \delta$ erfüllt ist. Der Winkelmessbereich kann mit einer Polpaarzahl der Synchronmaschine p gemäß $\delta = 360°/p$ korrelieren und für die Anzahl n der elektrisch leitfähigen Flügel 152 kann gelten: $n = p = 360°/\delta$. Die Befestigung des Geberrads 126 an dem rotierenden Element 114 kann über eine Schraub- und/oder Klebverbindung und/oder mit einem Längspressverfahren erfolgen.

Das Mikrobolometer-Element 148 ist eingerichtet, um eine Temperatur des rotierenden Elements 114 zu bestimmen. Das Mikrobolometer-Element 148 kann eingerichtet sein zu einer Erfassung der absoluten Temperatur des rotierenden Elements 114. Das Mikrobolometer-Element ist eingerichtet, mindestens ein temperaturabhängiges elektrisches Ausgangssignal 170 zu erzeugen. Das temperaturabhängige elektrische Ausgangssignal 170 kann beispielsweise ein Spannungssignal sein, welches proportional zur gemessenen Temperatur ist. Das Mikrobolometer-Element 148 ist eingerichtet, um das temperaturabhängige elektrische Ausgangssignal 170 über mindestens eine elektrische Zuleitung zu der anwendungsspezifischen integrierten Schaltung 140 zu übertragen, insbesondere zu leiten und/oder zu übermitteln. Die Temperaturmessung, insbesondere die Absoluttemperaturmessung, mit dem Mikrobolometer-Element 148 kann durch eine Rotation des Geberrads 126 erfolgen. Das Geberrad 126 kann als so genannter Chopper für das Mikrobolometer-Element 148 wirken. Das Mikrobolometer-Element 148 kann eingerichtet sein, periodisch die Temperatur des Geberrads 126 erfassen, wenn ein Flügel 152 vor dem Mikrobolometer-Element 148 steht, und in der Zwischenzeit die Temperatur des aus Sicht des Mikrobolometer-Elements 148 dahinter liegenden Bereiches (z.B. des B-Lagers 120). Aus der Drehwinkelinformation ist bekannt, wann der Flügel 152 vor dem Mikrobolometer-Element 148 ist und wann nicht. Zu Beginn der Laufzeit kann davon ausgegangen werden, dass beide Geberrad 126 und dahinter liegender Bereich dieselbe Temperatur haben. Dieselbe Temperatur T kann somit gemäß

$$p_{th,\lambda} = \epsilon \frac{2\pi h c^2}{\lambda^5} \left[ \exp\left(\frac{hc}{\lambda k_b T}\right) - 1 \right]^{-1},$$

wobei $p_{th,\lambda}$ die spektrale Leistungsdichte, h die Planck Konstante, c die Lichtgeschwindigkeit, $k_B$ die Boltzmann Konstante, T die gemessene Temperatur, und $\epsilon$ die Emissivität ist, für zwei verschiedene Emissivitäten, nämlich des Geberrads $\epsilon_{Geberrad}$ und des dahinter liegenden Bereichs $\epsilon_{Bereich}$, bestimmt werden.

Daraus kann wiederum die Emissivität $\epsilon_{Geberrad}$ des Geberrads 126 bestimmt werden. So kann eine Absoluttemperaturinformation ableitbar sein. Ein "Einlernen" des Mikrobolometer-Elements 148, also insbesondere eine Bestimmung der Emissivität $\epsilon_{Geberrad}$ des Geberrads 126, kann beispielsweise bei einer Kalibrierung des induktiven Positionssensors 124 bei einem Zusammenbau der Maschine erfolgen. Weiterhin können auch zur Laufzeit entsprechende Kalibrierungen vorgenommen werden. Die Bestimmung der Emissivität aus der gemessenen Temperatur des Geberrads 126 und des dahinter liegenden Bereichs kann beispielsweise mittels der Auswerteeinheit 130 erfolgen.

Figur 4 zeigt einen erfindungsgemäßen Aufbau eines ASIC 140. Das ASIC 140 ist genau an eine Erregerspule 136 und mindestens zwei Empfängerspulen 138 angeschlossen.

Mit einem nicht näher dargestellten Block 156 kann ein im Wesentlichen sinusförmiges Erregersignal 158 bereitgestellt werden, welches die Erregerspule 136 speist. Beispielsweise kann es sich bei dem Block 156 um eine Oszillatorschaltung handeln, welche einen LC Oszillator treibt, bei welchen die Erregerspule 136 sowie mindestens ein nicht dargestellter Kondensator als frequenzbestimmende Elemente wirken. Die Amplitude des Erregersignals 158 kann im Bereich von 0,1 V und 10 V, bevorzugt 5 V betragen, bei Frequenzen im Bereich von 1 MHz und 10 MHz, bevorzugt 3,5 MHz.

Die anwendungsspezifische integrierte Schaltung 140 kann mindestens eine Demodulationsvorrichtung 160 aufweisen, welche eingerichtet ist, um die Signale 162, 164 der Empfängerspulen 138 zu demodulieren, insbesondere synchron. Das Demodulieren kann ein Multiplizieren mit dem Erregersignal 158 umfassen. Die anwendungsspezifische integrierte Schaltung 140 kann mindestens einen Tiefpassfilter 166 aufweisen. Der Tiefpassfilter 166 kann eine Grenzfrequenz im Bereich von 50 kHz bis zu 500 kHz, bevorzugt 100 kHz, aufweisen. Beispielsweise kann die anwendungsspezifische integrierte Schaltung 140 zunächst die Signale 162, 164 der Empfängerspulen 138 demodulieren und anschließend mittels des Tiefpasses 166 filtern. Die anwendungsspezifische integrierte Schaltung 140 weist weiter mindestens einen Verstärker 168 auf.

Der Verstärker 168 kann die gefilterten Signale verstärken.

Die anwendungsspezifische integrierte Schaltung 140 ist eingerichtet, mindestens eine Temperaturinformation in die Signale 162, 164 der Empfängerspulen 138 zu kodieren. Die anwendungsspezifische integrierte Schaltung 140 weist den mindestens einen Verstärker 168 oder einen weiteren Verstärker 168 auf. Der Verstärker 168 ist eingerichtet, um die Signale 162, 164, insbesondere die gefilterten Signale, zu verstärken. Der Verstärker 168 ist eingerichtet, um die Amplituden der Signale 162, 164 der Empfängerspulen 138, insbesondere der gefilterten Signale, mit einem Verstärkungsfaktor zu verstärken, insbesondere zu multiplizieren. Die anwendungsspezifische integrierte Schaltung 140 ist eingerichtet, um das temperaturabhängige elektrische Ausgangssignal 170 des Mikrobolometer-Elements 148 zu erfassen. Das Mikrobolometer-Element 148 kann zur Übertragung des temperaturabhängigen elektrischen Ausgangssignals 170 mindestens eine Verbindung zu dem ASIC, insbesondere mindestens eine elektrische Zuleitung, aufweisen. Die anwendungsspezifische integrierte Schaltung 140 ist eingerichtet, um aus dem temperaturabhängigen elektrischen Ausgangssignal 170 mindestens einen Verstärkungsfaktor zu bestimmen. Der Verstärkungsfaktor ist proportional zu der mit dem Mikrobolometer-Element 148 bestimmten Temperatur.

Anschließend, nach der Verstärkung, können erzeugte Ausgangssignale 172, 174 von der anwendungsspezifischen integrierten Schaltung 140 über das Kabel 128 an die Auswerteeinheit 130 übertragen werden, so dass keine zusätzliche Signalleitung zwischen Mikrobolometer-Element 148 und Auswerteeinheit 130 notwendig ist.

Zusätzlich kann die anwendungsspezifische integrierte Schaltung 140 mindestens einen Addierer 176 aufweisen, welcher eingerichtet ist, die Signale 162, 164 der Empfängerspulen 138, insbesondere die gefilterten Signale, mit einem Offset 178 zu beaufschlagen. Der Offset 178, insbesondere ein zu addierendes Signal, kann direkt aus dem Mikrobolometer-Element 148 stammen und kann eine Spannung, welche proportional zu gemessenen Temperatur ist, repräsentieren. Aufgrund der geringen Dynamik der Rotortemperatur kann der Offset 178 durch Mittelwertbildung über einige zehn bis einige tausend Umdrehungen bestimmt werden und sich beispielsweise nur mit einer Updaterate von 1 Hz bis 10 Hz ändern. Vor der Beaufschlagung mit dem Offset 178 können die Signale der 162, 164 Empfängerspulen 138 verstärkt werden, beispielsweise von dem oben beschriebenen Verstärker 168. Anschließend, nach der Addition, können die Ausgangssignale 172, 174 von der anwendungsspezifischen integrierten Schaltung 140 über das Kabel 128 an die Auswerteeinheit 130 übertragen werden, so dass keine zusätzliche Signalleitung zwischen Mikrobolometer-Element 148 und Auswerteeinheit 130 notwendig ist.

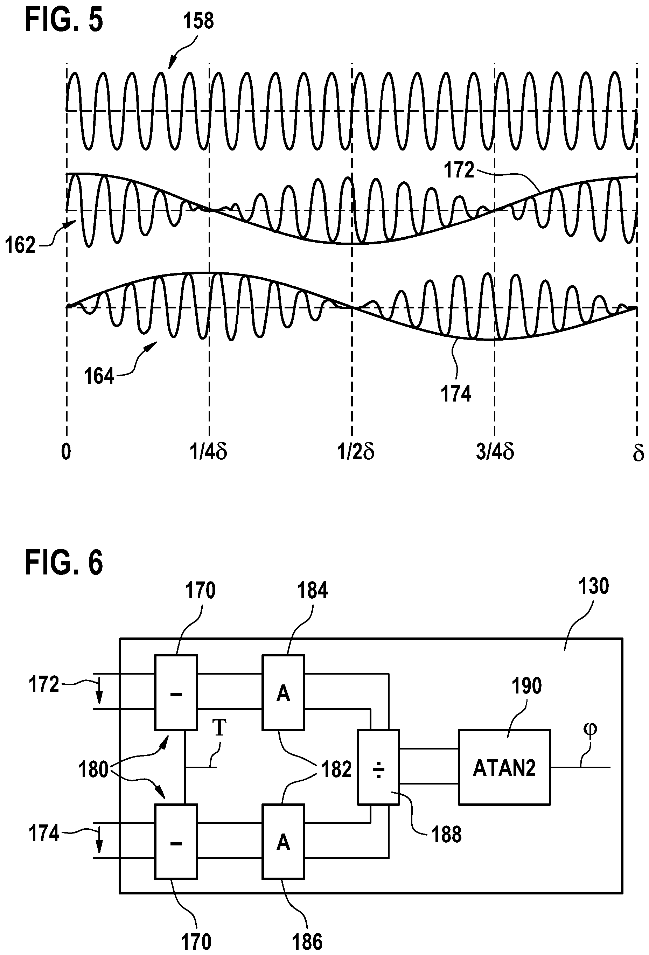

Beispielhafte Signalverläufe als Funktion des Drehwinkels für eine kontinuierliche Drehbewegung sind in Figur 5 dargestellt. Bei erfindungsgemäßer Ausgestaltung der Empfängerspulen 138 sowie des Geberrads 126 ergeben sich als Funktion des Drehwinkels ein demoduliertes sinusförmiges Signal 174 sowie ein demoduliertes cosinusförmiges Signal 172. Beide Signale weisen einen Offset 178 auf, der die Temperatur des Rotors repräsentiert.

Figur 6 zeigt eine Ausführungsform einer erfindungsgemäßen Auswerteeinheit 130. In der Auswerteeinheit 130 können die Ausgangssignale 172, 174 digitalisiert und weiterverarbeitet werden. Die Auswerteeinheit 130 kann mindestens einen Subtrahierer 180 aufweisen. Der Subtrahierer 180 kann eingerichtet sein, um den mindestens einen Offset 178 von den Ausgangssignalen 172, 174 zu bestimmen und daraus die Temperatur des rotierenden Elements 114 abzuleiten. Der Subtrahierer 180 kann eingerichtet sein, den Offset 178 anschließend von dem jeweiligen Ausgangssignal 172, 174 zu subtrahieren. Die Bestimmung des Offsets 178 kann durch Mittelwertbildung über eine ganzzahlige Anzahl an Perioden, durch Auswertung der 0. Harmonischen einer Fouriertransformation oder über min/max Schätzer erfolgen. Der Subtrahierer 180 kann mindestens eine elektronische Schaltung, beispielsweise mindestens einen Operationsverstärker und/oder mindestens einen Differenzverstärker, zur Durchführung der Bestimmung und Subtraktion des Offsets aufweisen und/oder die Auswerteeinheit 130 kann programmtechnisch ausgestaltet sein zur Durchführung der Bestimmung und Subtraktion des Offsets 178.

Die Auswerteeinheit 130 kann mindestens einen Verstärker 182 aufweisen, welcher eingerichtet ist, die Ausgangssignale 172, 174 zu normalisieren. Der Verstärker 182 kann eingerichtet sein, um die Ausgangssignale 172, 174 der anwendungsspezifischen integrierten Schaltung 140 derart zu normalisieren, dass Amplituden der Ausgangssignale 172, 174 im Wesentlichen identisch sind. Beispielsweise über das Kabel 128 kann das ASIC 140 mit der Auswerteeinheit 130 verbunden sein. Beispielsweise kann die Auswerteeinheit 130 derart ausgestaltet sein, dass die Ausgangssignale 172, 174 zunächst zu dem Subtrahierer 180 und anschließend als Offset-subtrahierte Ausgangssignale 184, 186 zu dem Verstärker 182 übermittelt werden. Auch andere Reihenfolgen sind jedoch denkbar.

Die Auswerteeinheit 130 kann mindestens einen Dividierer 188 aufweisen, welcher eingerichtet ist, mindestens ein Quotientensignal aus den Ausgangssignalen 184, 186 zu bestimmen. Die Division kann eine Division der Ausgangssignale und/oder eine Division von Vielfachen der Offset-subtrahierten Ausgangssignale 184, 186, und/oder eine Division von Linearkombinationen der Ausgangssignale 184, 186 umfassen. Die Auswerteeinheit 130 kann mindestens eine Arkusfunktionseinheit 190 aufweisen, welche eingerichtet ist, um die Rotationseigenschaft des um die Rotationsachse 112 rotierenden Elements 114 durch Bestimmen eines Arkustangens des Quotientensignals zu bestimmen. Beispielsweise kann bei einer Verwendung von zwei Empfängerspulen 138 eine der Empfängerspulen 138 ein Signal sin Φ und die andere Empfängerspule138 ein Signal cos Φ generieren, wobei Φ die Winkelposition ist. Wie oben ausgeführt kann die Berechnung von Φ durch Bestimmen von tanΦ = sinΦ/cosΦ und Bestimmen des Arkustangens erfolgen. Die Auswerteeinheit 130 kann weitere Module aufweisen, wie beispielsweise mindestens einen Filter, welcher eingerichtet ist, die Ausgangssignale 172, 174 der anwendungsspezifischen integrierten Schaltung 140 zu filtern.

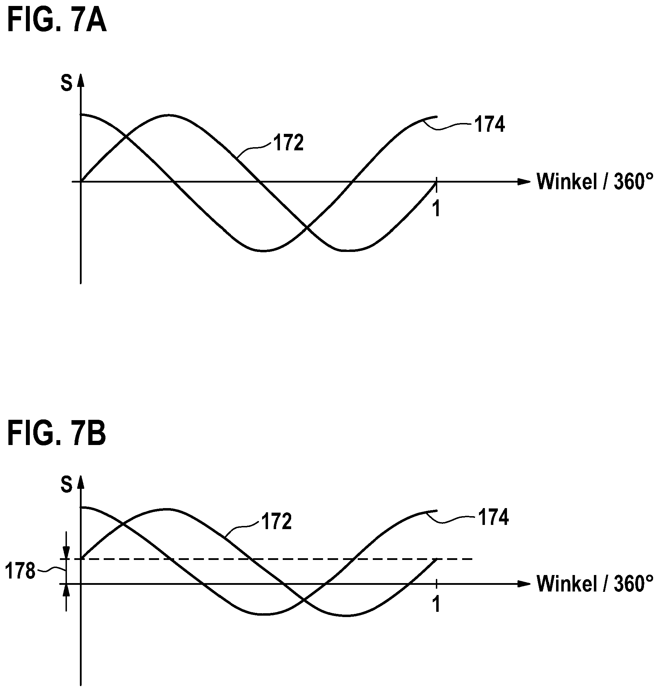

Figur 7A zeigt Signalformen für eine erste Temperatur T1, wobei die Amplitude S der Ausgangssignale 172, 174 als Funktion des Winkels/360° aufgetragen sind. Figur 7B zeigt entsprechende Signalformen für eine zweite Temperatur T2. Die Signale in Figur 7B weisen gegenüber Figur 7A den Offset 178 auf, aus welchem, wie oben beschrieben, die Temperatur des rotierenden Elements 114 bestimmt werden kann.

**Patentansprüche**

1. Induktiver Positionssensor (124) zur Erfassung mindestens einer Rotationseigenschaft eines um mindestens eine Rotationsachse (112) rotierenden Elements (114), umfassend:

   - mindestens einen Schaltungsträger (132);
   - mindestens eine Spulenanordnung (134), welche auf dem Schaltungsträger (132) angeordnet ist, wobei die Spulenanordnung (134) mindestens eine Erregerspule (136) und mindestens zwei Empfängerspulen (138) umfasst;
   - mindestens eine anwendungsspezifische integrierte Schaltung (ASIC) (140), welche auf dem Schaltungsträger (132) angeordnet ist, wobei die anwendungsspezifische integrierte Schaltung (140) eingerichtet ist, um von den Empfängerspulen (138) erzeugte Signale (162, 164) zu verarbeiten und als Ausgangssignale (172, 174) bereitzustellen;

   wobei
   die anwendungsspezifische integrierte Schaltung (ASIC) (140) eingerichtet ist, um ein Erregersignal (158) für die Erregerspule (136) bereitzustellen und dass der induktive Positionssensor (124) mindestens ein Mikrobolometer-Element (148) aufweist, welches eingerichtet ist, um die Temperatur des rotierenden Elementes zu bestimmen und welches auf dem Schaltungsträger (132) angeordnet ist, wobei das Mikrobolometer-Element (148) eingerichtet ist, um mindestens ein temperaturabhängiges elektrisches Ausgangssignal (170) zu erzeugen und das temperaturabhängige elektrische Ausgangssignal (170) über mindestens eine elektrische Zuleitung zu der anwendungsspezifischen integrierten Schaltung (140) zu übertragen, wobei die anwendungsspezifische integrierte Schaltung (140) eingerichtet ist, mindestens eine Temperaturinformation in die Signale (162, 164) der Empfängerspulen (138) zu kodieren, wobei die anwendungsspezifische integrierte Schaltung (140) mindestens einen Verstärker (168) aufweist, wobei der Verstärker (168) eingerichtet ist, um die Signale (162, 164) der Empfängerspulen (138) zu verstärken, wobei der Verstärker (168) eingerichtet ist, um Amplituden der Signale (162, 164) der Empfängerspulen (138) mit einem Verstärkungsfaktor zu verstärken, wobei die anwendungsspezifische integrierte Schaltung (140) eingerichtet ist, um aus dem temperaturabhängigen elektrischen Ausgangssignal (170) den Verstärkungsfaktor zu bestimmen, wobei der Verstärkungsfaktor proportional zu der mit dem Mikrobolometer-Element (148) bestimmten Temperatur ist.

2. Induktiver Positionssensor (124) nach dem vorhergehenden Anspruch, wobei das Mikrobolometer-Element (148) eingerichtet ist, um eine Temperatur des rotierenden Elements (114) zu bestimmen.

3. Induktiver Positionssensor (124) nach Anspruch 1, wobei die anwendungsspezifische integrierte Schaltung (140) mindestens einen Addierer (176) aufweist, welcher eingerichtet ist, die Signale (162, 164) der Empfängerspulen (138) mit einem Offset (178) zu beaufschlagen, wobei die anwendungsspezifische integrierte Schaltung (140) eingerichtet ist, um aus dem temperaturabhängigen elektrischen Ausgangssignal (170) den Offset (178) zu bestimmen, wobei der Offset (178) proportional zu der mit dem Mikrobolometer-Element (148) bestimmten Temperatur ist.

4. Induktiver Positionssensor (124) nach einem der vorhergehenden Ansprüche, wobei die anwendungsspezifische integrierte Schaltung (140) mindestens eine Demodulationsvorrichtung (160) aufweist, welche eingerichtet ist, um die Signale (162, 164) der Empfängerspulen (138) zu demodulieren, wobei das Demodulieren ein Multiplizieren mit dem Erregersignal (158) umfasst.

5. Induktiver Positionssensor (124) nach einem der vorhergehenden Ansprüche, wobei die anwendungsspezifische integrierte Schaltung (140) mindestens einen Tiefpassfilter (166) aufweist, wobei der Tiefpassfilter (166) eine Grenzfrequenz im Bereich von 50 kHz bis zu 500 kHz aufweist.

6. Induktiver Positionssensor (124) nach einem der vorhergehenden Ansprüche, wobei das Erregersignal (158) ein sinusförmiges Erregersignal ist, wobei das Erregersignal (158) eine Amplitude im Bereich von 0,1 V bis 10 V aufweist, wobei das Erregersignal (158) eine Frequenz im Bereich von 1 MHz bis 10 MHz aufweist.

7. Induktiver Positionssensor (124) nach einem der vorhergehenden Ansprüche, wobei der induktive Positionssensor (124) ein induktiver Rotorlagesensor ist.

8. Sensorsystem (110) zur Bestimmung mindestens einer Rotationseigenschaft eines um mindestens eine Rotationsachse (112) rotierenden Elements (114), wobei das Sensorsystem (110) mindestens einen induktiven Positionssensor (124) nach einem der vorhergehenden Ansprüche aufweist, wobei das Sensorsystem (110) mindestens ein mit dem rotierenden Element (114) verbindbares Geberrad (126) aufweist, wobei das Sensorsystem (110) mindestens eine Auswerteeinheit (130) aufweist.

9. Sensorsystem (110) nach dem vorhergehenden Anspruch, wobei das Sensorsystem (110) eingerichtet ist, mindestens eine Temperatur des um die Rotationsachse (112) rotierenden Elements (114) zu bestimmen, wobei die Auswerteeinheit (130) mindestens einen Subtrahierer (180) aufweist, wobei der Subtrahierer (180) eingerichtet ist, um mindestens einen Offset (178) von Ausgangssignalen (172, 174) des induktiven Positionssensors (124) zu bestimmen und daraus die Temperatur abzuleiten.

10. Sensorsystem (110) nach einem der zwei vorhergehenden Ansprüche, wobei das Sensorsystem (110) eingerichtet ist, die mindestens eine Temperatur des um die Rotationsachse (112) rotierenden Elements (114) zu bestimmen, wobei die Auswerteeinheit (130) mindestens einen Dividierer (188) aufweist, wobei der Dividierer (188) eingerichtet ist, um mindestens einen Verstärkungsfaktor von Ausgangssignalen (172, 174) des induktiven Positionssensors (124) zu bestimmen und daraus die Temperatur abzuleiten.

11. Verfahren zur Bestimmung mindestens einer Temperatur und einer Rotationseigenschaft eines um mindestens eine Rotationsachse (112) rotierenden Elements (114), wobei das Verfahren die Verwendung mindestens eines Sensorsystems (110) nach einem der vorhergehenden, ein Sensorsystem betreffenden, Ansprüche umfasst, wobei das Verfahren weiterhin folgende Schritte umfasst:

   - Aufnehmen mindestens zweier induktiver Signale (162, 164) mittels Empfängerspulen (138) eines induktiven Positionssensors (124) des Sensorsystems (110);
   - Erzeugen mindestens eines temperaturabhängigen elektrischen Ausgangssignals (170) mittels eines Mikrobolometer-Elements (148) des induktiven Positionssensors (124), wobei das Mikrobolometer-Element (148) eingerichtet ist, um die Temperatur des rotierenden Elementes zu bestimmen und um mindestens ein temperaturabhängiges elektrisches Ausgangssignal (170) zu erzeugen und das temperaturabhängige elektrische Ausgangssignal (170) über mindestens eine elektrische Zuleitung zu der anwendungsspezifischen integrierten Schaltung (140) zu übertragen,

- Bestimmen zweier kombinierter Signale (172, 174) aus jeweils einem induktiven Signal (162, 164) und dem temperaturabhängigen elektrischen Ausgangssignal (170), wobei aus dem temperaturabhängigen elektrischen Ausgangssignal (170) ein zu der mit dem Mikrobolometer-Element (148) bestimmten Temperatur proportionaler Verstärkungsfaktor bestimmt wird, wobei eine Temperaturinformation in die Signale (162, 164) der Empfängerspulen (138) kodiert wird, indem die Signale (162, 164) der Empfängerspulen (138) mitteils eines Verstärkers (168) verstärkt werden und der Verstärker (168) die Amplituden der Signale (162, 164) der Empfängerspulen (138) mit dem zu der mit dem Mikrobolometer-Element (148) bestimmten Temperatur proportionalen Verstärkungsfaktor verstärkt;

- Auswertung der kombinierten Signale (172, 174) und Ermittlung der Rotationseigenschaft und Temperatur mittels der kombinierten Signale (172, 174).

**Claims**

1. Inductive position sensor (124) for capturing at least one rotation property of an element (114) rotating about at least one axis of rotation (112), comprising:

- at least one circuit carrier (132);
- at least one coil arrangement (134) which is arranged on the circuit carrier (132), wherein the coil arrangement (134) comprises at least one excitation coil (136) and at least two receiver coils (138);
- at least one application-specific integrated circuit (ASIC) (140) which is arranged on the circuit carrier (132), wherein the application-specific integrated circuit (140) is configured to process signals (162, 164) generated by the receiver coils (138) and to provide them as output signals (172, 174);

wherein the application-specific integrated circuit (ASIC) (140) is configured to provide an excitation signal (158) for the excitation coil (136), and the inductive position sensor (124) has at least one microbolometer element (148) which is configured to the determine the temperature of the rotating element and is arranged on the circuit carrier (132), wherein the microbolometer element (148) is configured to generate at least one temperature-dependent electrical output signal (170) and to transmit the temperature-dependent electrical output signal (170) to the application-specific integrated circuit (140) via at least one electrical supply line, wherein the application-specific integrated circuit (140) is configured to code at least one item of temperature information in the signals (162, 164) from the receiver coils (138), wherein the application-specific integrated circuit (140) has at least one amplifier (168), wherein the amplifier (168) is configured to amplify the signals (162, 164) from the receiver coils (138), wherein the amplifier (168) is configured to amplify amplitudes of the signals (162, 164) from the receiver coils (138) with a gain factor, wherein the application-specific integrated circuit (140) is configured to determine the gain factor from the temperature-dependent electrical output signal (170), wherein the gain factor is proportional to the temperature determined using the microbolometer element (148).

2. Inductive position sensor (124) according to the preceding claim, wherein the microbolometer element (148) is configured to determine a temperature of the rotating element (114).

3. Inductive position sensor (124) according to Claim 1, wherein the application-specific integrated circuit (140) has at least one adder (176) which is configured to apply an offset (178) to the signals (162, 164) from the receiver coils (138), wherein the application-specific integrated circuit (140) is configured to determine the offset (178) from the temperature-dependent electrical output signal (170), wherein the offset (178) is proportional to the temperature determined using the microbolometer element (148).

4. Inductive position sensor (124) according to one of the preceding claims, wherein the application-specific integrated circuit (140) has at least one demodulation device (160) which is configured to demodulate the signals (162, 164) from the receiver coils (138), wherein the demodulation comprises a multiplication by the excitation signal (158).

5. Inductive position sensor (124) according to one of the preceding claims, wherein the application-specific integrated circuit (140) has at least one low-pass filter (166), wherein the low-pass filter (166) has a cut-off frequency in the range of 50 kHz to 500 kHz.

6. Inductive position sensor (124) according to one of the preceding claims, wherein the excitation signal (158) is a sinusoidal excitation signal, wherein the excitation signal (158) has an amplitude in the range of 0.1 V to 10 V, wherein the excitation signal (158) has a frequency in the range of 1 MHz to 10 MHz.

**7.** Inductive position sensor (124) according to one of the preceding claims, wherein the inductive position sensor (124) is an inductive rotor position sensor.

**8.** Sensor system (110) for determining at least one rotation property of an element (114) rotating about at least one axis of rotation (112), wherein the sensor system (110) has at least one inductive position sensor (124) according to one of the preceding claims, wherein the sensor system (110) has at least one encoder wheel (126) which can be connected to the rotating element (114), wherein the sensor system (110) has at least one evaluation unit (130).

**9.** Sensor system (110) according to the preceding claim, wherein the sensor system (110) is configured to determine at least one temperature of the element (114) rotating about the axis of rotation (112), wherein the evaluation unit (130) has at least one subtractor (180), wherein the subtractor (180) is configured to determine at least one offset (178) of output signals (172, 174) from the inductive position sensor (124) and to derive the temperature therefrom.

**10.** Sensor system (110) according to one of the two preceding claims, wherein the sensor system (110) is configured to determine the at least one temperature of the element (114) rotating about the axis of rotation (112), wherein the evaluation unit (130) has at least one divider (188), wherein the divider (188) is configured to determine at least one gain factor of output signals (172, 174) from the inductive position sensor (124) and to derive the temperature therefrom.

**11.** Method for determining at least one temperature and one rotation property of an element (114) rotating about at least one axis of rotation (112), wherein the method comprises the use of at least one sensor system (110) according to one of the preceding claims relating to a sensor system, wherein the method also comprises the following steps of:

- receiving at least two inductive signals (162, 164) by means of receiver coils (138) of an inductive position sensor (124) of the sensor system (110);
- generating at least one temperature-dependent electrical output signal (170) by means of a microbolometer element (148) of the inductive position sensor (124), wherein the microbolometer element (148) is configured to determine the temperature of the rotating element and to generate at least one temperature-dependent electrical output signal (170) and to transmit the temperature-dependent electrical output signal (170) to the application-specific integrated circuit (140) via at least one electrical supply line,

- determining two combined signals (172, 174) from in each case an inductive signal (162, 164) and the temperature-dependent electrical output signal (170), wherein a gain factor proportional to the temperature determined using the microbolometer element (148) is determined from the temperature-dependent electrical output signal (170),
wherein temperature information is coded in the signals (162, 164) from the receiver coils (138) by virtue of the signals (162, 164) from the receiver coils (138) being amplified by means of an amplifier (168) and the amplifier (168) amplifying the amplitudes of the signals (162, 164) from the receiver coils (138) with the gain factor proportional to the temperature determined using the microbolometer element (148);
- evaluating the combined signals (172, 174) and determining the rotation property and temperature by means of the combined signals (172, 174).

**Revendications**

**1.** Capteur de position inductif (124) destiné à détecter au moins une propriété de rotation d'un élément (114) tournant sur au moins un axe de rotation (112), ledit capteur comprenant :

- au moins un support de circuit (132) ;
- au moins un ensemble de bobines (134) qui est disposé sur le support de circuit (132), l'ensemble de bobines (134) comprenant au moins une bobine d'excitation (136) et au moins deux bobines de réception (138) ;
- au moins un circuit intégré (140) spécifique à une application (ASIC) qui est disposé sur le support de circuit (132), le circuit intégré (140) spécifique à l'application étant conçu pour traiter des signaux (162, 164) générés par les bobines de réception (138) et pour les fournir en tant que signaux de sortie (172, 174) ;

le circuit intégré (140) spécifique à l'application (ASIC) étant conçu pour fournir un signal d'excitation (158) à la bobine d'excitation (136) et le capteur de position inductif (124) comprenant au moins un élément micro-bolomètre (148) qui est conçu pour déterminer la température de l'élément rotatif et qui est disposé sur le support de circuit (132), l'élément micro-bolomètre (148) étant conçu pour générer au moins un signal de sortie électrique (170) dépendant de la température et pour transmettre le signal de sortie électrique (170) dépendant de la température par le biais d'au moins une ligne d'amenée électrique au circuit intégré (140) spécifique à l'application, le circuit intégré (140) spécifique à application étant conçu pour coder au moins une information de température dans les signaux (162, 164) des bobines de réception (138), le circuit intégré (140) spécifique à l'application comportant au moins un amplificateur (168), l'amplificateur (168) étant conçu pour amplifier les signaux (162, 164) des bobines de réception (138), l'amplificateur (168) étant conçu pour amplifier les amplitudes des signaux (162, 164) des bobines de réception (138) avec un facteur d'amplification, le circuit intégré (140) spécifique à l'application étant conçu pour déterminer le facteur d'amplification à partir du signal de sortie électrique (170) dépendant de la température, le facteur d'amplification étant proportionnel à la température déterminée avec l'élément micro-bolomètre (148).

2. Capteur de position inductif (124) selon la revendication précédente, l'élément micro-bolomètre (148) étant conçu pour déterminer une température de l'élément rotatif (114).

3. Capteur de position inductif (124) selon la revendication 1, le circuit intégré (140) spécifique à l'application comportant au moins un additionneur (176) qui est conçu pour appliquer un décalage (178) aux signaux (162, 164) des bobines de réception (138), le circuit intégré (140) spécifique à l'application étant conçu pour déterminer le décalage (178) à partir du signal de sortie électrique (170) dépendant de la température, le décalage (178) étant proportionnel à la température déterminée avec l'élément micro-bolomètre (148) .

4. Capteur de position inductif (124) selon l'une des revendications précédentes, le circuit intégré (140) spécifique à l'application comportant au moins un dispositif de démodulation (160) qui est conçu pour démoduler les signaux (162, 164) des bobines de réception (138), la démodulation comprenant la multiplication par le signal d'excitation (158).

5. Capteur de position inductif (124) selon l'une des revendications précédentes, le circuit intégré (140) spécifique à l'application comportant au moins un filtre passe-bas (166), le filtre passe-bas (166) ayant une fréquence de coupure dans la plage allant de 50 kHz à 500 kHz.

6. Capteur de position inductif (124) selon l'une des revendications précédentes, le signal d'excitation (158) étant un signal d'excitation sinusoïdal, le signal d'excitation (158) ayant une amplitude dans la plage allant de 0,1 V à 10 V, le signal d'excitation (158) ayant une fréquence dans la plage allant de 1 MHz à 10 MHz.

7. Capteur de position inductif (124) selon l'une des revendications précédentes, le capteur de position inductif (124) étant un capteur de position de rotor inductif.

8. Système de capteurs (110) destiné à déterminer au moins une propriété de rotation d'un élément (114) tournant sur au moins un axe de rotation (112), le système de capteurs (110) comportant au moins un capteur de position inductif (124) selon l'une des revendications précédentes, le système de capteurs (110) comportant au moins une roue de transmission (126) qui peut être reliée à l'élément rotatif (114), le système de capteurs (110) comportant au moins une unité d'évaluation (130).

9. Système de capteurs (110) selon la revendication précédente, le système de capteurs (110) étant conçu pour déterminer au moins une température de l'élément (114) rotatif sur l'axe de rotation (112), l'unité d'évaluation (130) comportant au moins un soustracteur (180), le soustracteur (180) étant conçu pour déterminer au moins un décalage (178) des signaux de sortie (172, 174) du capteur de position inductif (124) et pour en déduire la température.

10. Système de capteurs (110) selon l'une des deux revendications précédentes, le système de capteurs (110) étant conçu pour déterminer l'au moins une température de l'élément (114) rotatif sur l'axe de rotation (112), l'unité d'évaluation (130) comportant au moins un diviseur (188), le diviseur (188) étant conçu pour déterminer au moins un facteur d'amplification des signaux de sortie (172, 174) du capteur de position inductif (124) et pour en déduire la température.

11. Procédé de détermination d'au moins une température et d'une propriété de rotation d'un élément (114) tournant sur au moins un axe de rotation (112), le procédé comprenant l'utilisation d'au moins un système de capteurs (110) selon l'une des revendications précédentes concernant un système de capteurs, le procédé comprenant en outre les étapes suivantes :

   - acquérir au moins deux signaux inductifs (162, 164) au moyen de bobines de réception (138) d'un capteur de position inductif (124) du système de capteurs (110) ;
   - générer au moins un signal de sortie électrique (170) dépendant de la température à l'aide d'un élément micro-bolomètre (148) du capteur de position inductif (124), l'élément micro-bolomètre (148) étant conçu pour déterminer la température de l'élément rotatif et pour générer au moins un signal de sortie électrique (170) dépendant de la température, et pour transmettre le signal de sortie électrique (170) dépendant de la température par le biais d'au moins une ligne d'amenée électrique au circuit intégré (140) spécifique à l'application,

- déterminer deux signaux combinés (172, 174) à chaque fois à partir d'un signal inductif (162, 164) et du signal de sortie électrique (170) dépendant de la température, un facteur d'amplification proportionnel à la température déterminée avec l'élément micro-bolomètre (148) étant déterminé à partir du signal de sortie électrique (170) dépendant de la température, une information de température étant codée dans les signaux (162, 164) des bobines de réception (138) en ce que les signaux (162, 164) des bobines de réception (138) sont amplifiés au moyen d'un amplificateur (168) et l'amplificateur (168) amplifie les amplitudes des signaux (162, 164) des bobines de réception (138) avec le facteur d'amplification proportionnel à la température déterminée avec l'élément micro-bolomètre (148) ;

- évaluer les signaux combinés (172, 174) et déterminer la propriété de rotation et la température à l'aide des signaux combinés (172, 174).

**FIG. 1**

**FIG. 2**

# FIG. 3

126

β

152

α

154

y
x

FIG. 4

FIG. 5

FIG. 6

## FIG. 7A

S

172

174

Winkel / 360°

1

## FIG. 7B

S

172

174

178

Winkel / 360°

1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018108365 A1
- EP 2902759 A1
- EP 3062076 A1
- US 2006255794 A1
- EP 2027475 A1
- DE 102014213103
- DE 102017210655

**In der Beschreibung aufgeführte Nicht-Patentliteratur**

- Konrad Reif (Hrsg.): Sensoren im Kraftfahrzeug. 2012, 63-74, 120-129